# EUROPEAN PATENT APPLICATION

(11) **EP 2 129 081 A1**
(43) Date of publication of application: **02.12.2009**
(21) Application number: 09159633.8
(22) Date of filing: 07.05.2009
(51) Int. Cl.: H04L 29/08, H04L 29/06, G06F 17/30, G06F 21/00

(54) **SIP network-based content sharing method and system**

(30) Priority: 09.05.2008 KR 20080043622
(71) Applicant: Samsung Electronics Co., Ltd., Suwon-si, Gyeonggi-do 442-742 (KR)
(72) Inventor: Kim, Kyoung Won, Gyeonggi-do (KR); Dahiya, Rajan, Gyeonggi-do (KR); Oh, Jae Kwon, Gyeonggi-do (KR); Han, Seung Wook, Gyeonggi-do (KR)
(74) Representative: Boakes, Jason Carrington

(57) **Abstract**

A content sharing method and system are provided such that a first client stores a content in one of its local storage and a content server and a second client requests from an information server one of a query and subscription of the content and downloads the content from the respective one of the local storage of the first client and the content server with reference to the respective one of the query and subscription result sent by the information server. In the content sharing method a first client stores a content in a content server or a local storage and assigns a content IDentifier (ID) to the content, creates a content list having content items each identified by a unique content ID, and registers the content list and an access rule with an information server, and the information server sends, when a second client requests one of a query and a subscription of the content, a respective one of a query result and a subscription result to the second client in consideration of a second client's access right specified in the access rule.

## Description

### BACKGROUND OF THE INVENTION

### 1. Field of the Invention:

The present invention relates to a communication network. More particularly, the present invention relates to a content sharing method and system in which a first client stores a content in its local storage or a content server and a second client requests an information server for a query or subscription of the content and downloads the content from the local storage of the first client or the content server with reference to the query or subscription result sent by the information server.

### 2. Description of the Related Art:

Session Initiation Protocol (SIP) is a signaling protocol widely used for communication sessions such as voice call, video conferencing, and instant messaging. The SIP is an application layer protocol designed to allow intelligent end points to identify each other, create, terminate, and modify multimedia sessions over the Internet.

Meanwhile, an Internet Protocol (IP) Multimedia Subsystem (IMS) is a unifying architecture for IP-based high capacity multimedia services over both packet-switched and circuit-switched networks. Recently, IMS is becoming the key component for the convergence of mobile and fixed network services due to its flexibility. With the IMS, the operators can reduce application development and administration costs and provide subscribers with services integrating Voice over IP (VoIP), instant messaging, Push-To-Talk (PTT), and other services.

With an SIP-based IMS domain, various methods are proposed for sharing the contents stored in local storages of the subscribers in a distributed manner.

In most cases, however, since the contents are stored in the subscribers' local storages, it is not possible for a subscriber to search and download the content stored in another subscriber terminal that is offline. In addition, in view of security, the subscriber's terminal is more vulnerable to external attacks than a content server. Furthermore, simultaneous multiple download attempts of a specific content are likely to degrade the subscriber's terminal storing the contents.

### SUMMARY OF THE INVENTION

An aspect of the present invention is to address at least the above-mentioned problems and/or disadvantages and to provide at least the advantages described below. Accordingly, an aspect of the present invention is to provide a content sharing method and system that is capable of locating a content that is accessible regardless of a connection status in an SIP network-based IMS domain.

Another aspect of the present invention is to provide a content sharing method and system that enables a client to share contents with all or designated clients in an SIP network-based IMS domain.

Still another aspect the present invention is to provide a content sharing method and system that enables a client to search for a specific content stored in another client in an SIP network-based IMS domain.

Yet another aspect of the present invention is to provide a content sharing method and system that enables a client to upload and update shared content with the notification in an SIP network-based IMS domain.

In accordance with an aspect of the present invention, a content sharing method is provided. The method includes storing, by a first client, a content in one of a content server and a local storage and assigning a content IDentifier (ID) to the content, creating a content list having content items, each identified by a unique content ID, registering the content list and an access rule with an information server, and sending, when a second client requests one of a query and a subscription of the content, a respective one of a query result and a subscription result from the information server to the second client in consideration of a second client's access right specified in the access rule.

In accordance with another aspect of the present invention, a content sharing system is provided. The system includes a first client for storing a shared content, for assigning a content ID to the content, and for registering a content list and an access rule, a content server for storing the shared content received from the first client, an information server for registering the content list and the access rule received from the first client and for sending a query result in response to a query request and a subscription result in response to a subscription request, and a second client for sending one of a query request and a subscription request for a specific content to the information server and for receiving a respective one of the query result and the subscription result from the information server.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a diagram illustrating a framework of a content sharing system according to a first exemplary embodiment of the present invention;

FIG. 2 is a diagram illustrating a configuration of a client of the content sharing system of FIG. 1, according to an exemplary embodiment of the present invention;

FIG. 3 is a block diagram illustrating a configuration of the information server of FIG. 1, according to an exemplary embodiment of the present invention;

FIG. 4A is a diagram illustrating an interface between a client and its local storage according to an exemplary embodiment of the present invention;

FIG. 4B is a diagram illustrating an interface between a client and a content server according to an exemplary embodiment of the present invention;

FIG. 5A is a signaling diagram illustrating a content list registration procedure in the content sharing system of FIG. 1, according to an exemplary embodiment of the present invention;

FIG. 5B is a signaling diagram illustrating an access rule registration procedure in the content sharing system of FIG. 1, according to an exemplary embodiment of the present invention;

FIG. 6 is a signaling diagram illustrating a query procedure in the content sharing system of FIG. 1, according to an exemplary embodiment of the present invention;

FIG. 7 is a signaling diagram illustrating a subscription procedure in the content sharing system of FIG. 1, according to an exemplary embodiment of the present invention;

FIG. 8 is a signaling diagram illustrating an update notification procedure in the content sharing system of FIG. 1, according to an exemplary embodiment of the present invention;

FIG. 9 is a flowchart illustrating a content sharing method according to an exemplary embodiment of the present invention;

FIG. 10 is a flowchart illustrating the content list registration procedure of FIG. 9, according to an exemplary embodiment of the present invention;

FIG. 11 is a flowchart illustrating the query mode operation procedure of FIG. 9, according to an exemplary embodiment of the present invention;

FIG. 12 is a flowchart illustrating the subscription mode operation procedure of FIG. 9, according to an exemplary embodiment of the present invention;

FIG. 13 is a diagram illustrating a framework of a content sharing system according to a second exemplary embodiment of the present invention;

FIG. 14 is a diagram illustrating a configuration of the presence server of FIG. 13, according to an exemplary embodiment of the present invention;

FIG. 15 is a signaling diagram illustrating a subscription procedure in the content sharing system of FIG. 13, according to an exemplary embodiment of the present invention;

FIG. 16A is a signaling diagram illustrating a content list acquisition procedure in the content sharing system of FIG. 13 according to an exemplary embodiment of the present invention;

FIG. 16B is a signaling diagram illustrating a content list update notification procedure in the content sharing system of FIG. 13, according to an exemplary embodiment of the present invention;

FIG. 17A is a signaling diagram illustrating a content list acquisition procedure in the content sharing system of FIG. 13, according to another exemplary embodiment of the present invention;

FIG. 17B is a signaling diagram illustrating a content list update notification procedure in the content sharing system of FIG. 13, according to another exemplary embodiment of the present invention;

FIG. 18 is a flowchart illustrating the content sharing method generalized from the procedures of FIGs. 15, 16A, 16B, 17A, and 17B, according to an exemplary embodiment of the present invention;

FIG. 19 is a diagram illustrating a framework of a content sharing system according to a third exemplary embodiment of the present invention;

FIG. 20 is a signaling diagram illustrating a notification procedure in the content sharing system of FIG. 19, according to an exemplary embodiment of the present invention;

FIG. 21 is a diagram illustrating a content sharing method implemented with the notification procedure of FIG. 20, according to an exemplary embodiment of the present invention; and

FIG. 22 is a diagram illustrating a content download procedure of the content sharing system of FIG. 19, according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, the term "first client" denotes a user terminal which stores a content to be shared (hereinafter referred to as a shared content), and the term "second client" denotes a user terminal which queries or subscribes to a shared content and searches for or acquires the location of the shared content.

Although the content sharing method and system is described with a Session Initiation Protocol (SIP) network-based Internet Protocol (IP) Multimedia Subsystem (IMS) domain in the following exemplary embodiments, the present invention is not limited thereto. For example, the content sharing method and system can be applied to any other network implemented with SIP.

Three exemplary embodiments of the content sharing method of the present invention are described.

In the first exemplary embodiment, the first client stores a shared content within its local storage or a content server and sends an information server a content list containing metadata of the shared content, and the second client requests a query of or subscription to the information server and receives the query result or an updated content list.

In the second exemplary embodiment, once the second client subscribes to a content list, the information server notifies or publishes the update of the content list to a presence server whenever the content list is updated, and the presence server notifies the second client of the updated content list.

In the third exemplary embodiment, after the second client requests a subscription to a presence server, when the first client or the content server publishes the content list, to the presence server, the presence server notifies the second client of the published content list.

The content sharing method according to the first exemplary embodiment of the present invention is described hereinafter.

### First Exemplary Embodiment

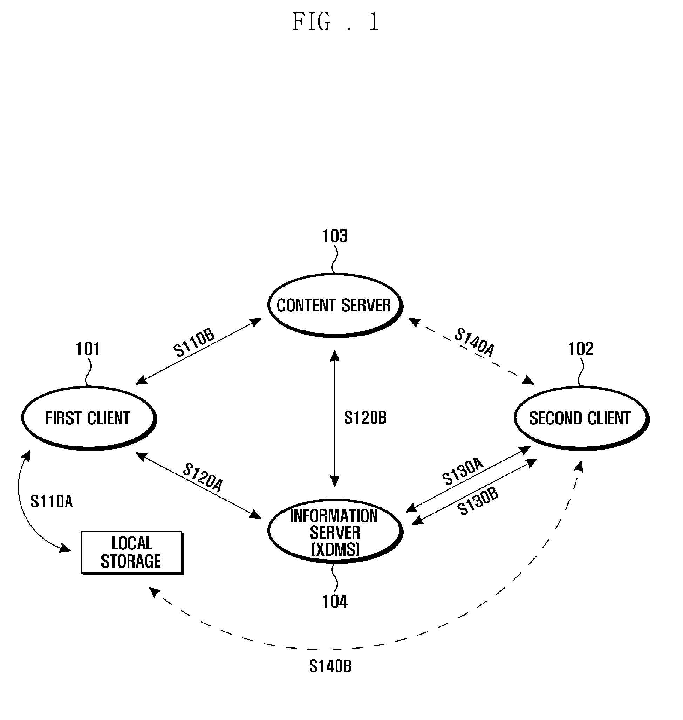

FIG. 1 is a diagram illustrating a framework of a content sharing system according to a first exemplary embodiment of the present invention. As illustrated in FIG. 1, the content sharing system includes a first client 101, a second client 102, a content server 103, and an information server 104.

The first client 101 is a terminal of the owner of contents to be shared (shared contents). In a case where the shared contents are stored in the local storage of the first client 101, the first client 101 can create content IDentifiers (IDs) of the stored shared contents.

The second client 102 requests a query of a specific one of the shared contents and acquires the location of the shared content in response to the query. In addition, the second client 102 can request a subscription to the specific shared content and acquires the location of the shared content in the form of a notification to the subscription.

The content server 103 stores the shared contents provided by the first client 101 and creates content IDs representing the shared contents and sends the content IDs to the first client 101.

The information server 104 receives and registers a content list or an access rule from the first client 101 or the content server 103. If a content query or a content subscription is received from the second client 102, the information server 104 checks the content list or the access rule and sends a content search result to the second client.

In an exemplary embodiment, the information server 104 can be an XML-based Document Management Server (XDMS) compliant with the Open Mobile Alliance (OMA) standard.

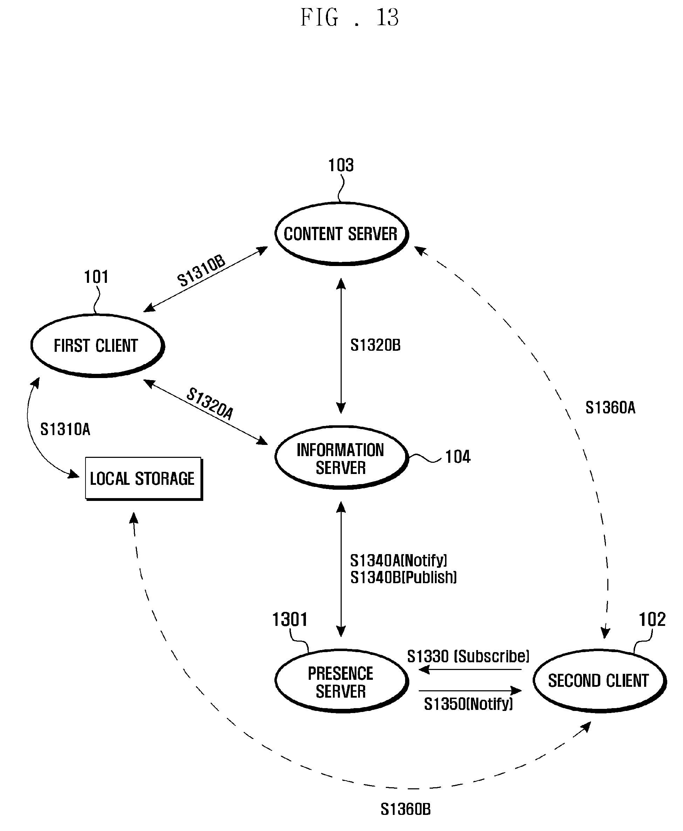

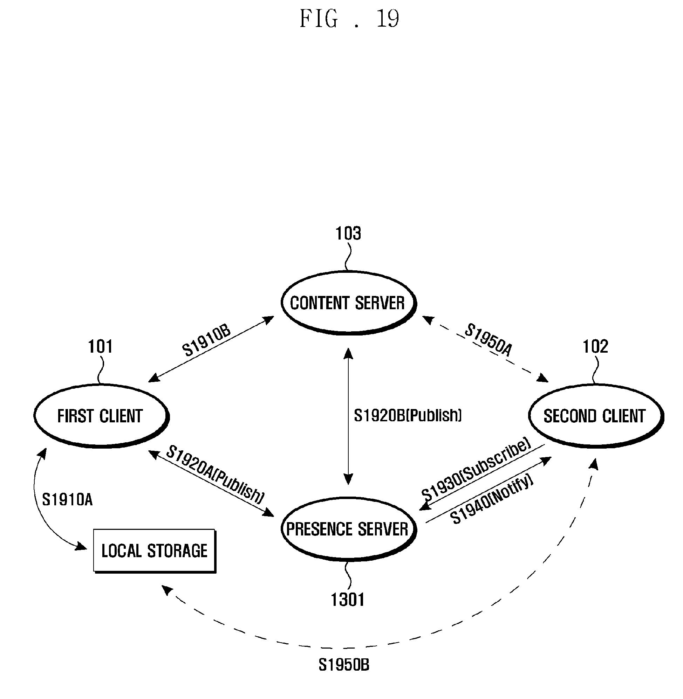

The operations of the first and second clients 101 and 102 and content and information servers 103 and 104 are described hereinafter in more detail with reference to FIG. 1. In FIG. 1, it is noted that reference characters "A" and "B" are used to distinguish the same steps S110, S120, S130, and S140 of the two content sharing methods according to different exemplary embodiments from each other and there are no sequential relationships between the steps, e.g. S110A, S120A, S 130A, and S 140A (also, this is the case in FIGs. 13 and 19).

The first client 101 stores a shared content within its local storage and creates a content list including metadata (described in detail further below) of the shared content in step S110A. Next, the first client 101 sends an access rule configured with the content list and sharing rights of individual clients to registers with the information server 104 in step S120A. Afterward, if the second client 102 requests a query of a specific content to the information server 104, the content server 104 searches for the information of the specific content in the registered content list in step S130A. Next, the information server 104 creates a query result message in an access right range permitted in the access rule and sends the query result message to the second client 102.

Instead of requesting a query of the specific content, the second client 102 can request a subscription to the specific content in step S130B. In this case, whenever the content list is updated, the information server notifies the second client 102 of the update of the content list.

The first client 101 can store the shared content within the content server 103 in step S110B rather than its local storage in step S110A. The first client 101 receives a content ID created at the content server 103 and generates a content list with the content ID. The first client sends the content list to the information server 104 in step S 120A. Instead of the first client 101 sending the content list to the information server 104 in step S120A, the content server 103 can send the content list to the information server 104 in step S120B. The two processes, S130A and S130B are similar, but differ in that the query result is communicated in step S 130A and the update notification is communicated in step S 130B.

After checking the storage location of the target content at step S130A or S 130B, the second client 102 can download the target content from the first client's local storage in step S 140B or the content server 103 in step S 140A using a protocol such as Message Session Relay Protocol (MSRP) and Hypertext Transfer Protocol (HTTP).

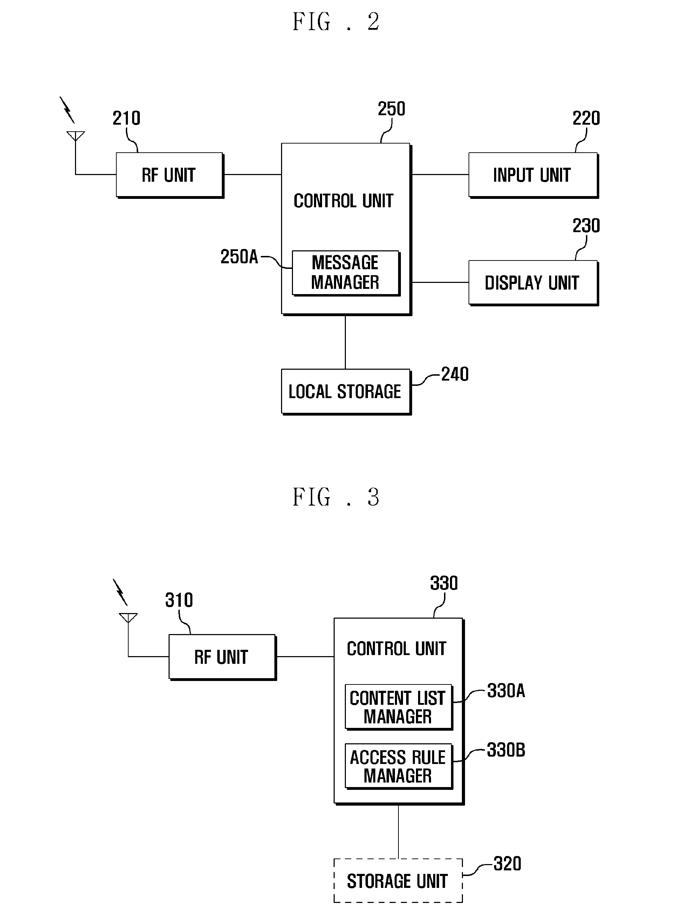

FIG. 2 is a diagram illustrating a configuration of a client of the content sharing system of FIG. 1, according to an exemplary embodiment of the present invention. The first and second clients 101 and 102 of FIG. 1 can each be configured using the structure illustrated in FIG 2.

Referring to FIG. 2, each of the first and second clients 101 and 102 includes a Radio Frequency (RF) unit 210, an input unit 220, a display unit 230, a local storage unit 240, and a control unit 250. The control unit 250 includes a message manager 250A.

The RF unit 210 is responsible for processing radio signals to be transmitted to and received from the content server 103 or the information server 104.

The input unit 220 is provided with a plurality of alphanumeric keys and function keys and outputs a key sequence corresponding to the key input by the user. In an exemplary embodiment, the input unit 220 is configured to allow a user to input a query or a subscription request for a specific content.

The display unit 230 displays the operational status of the client 101 (102), alphanumeric data, visual images, and the metadata of the specific content that was found during a search, according to an exemplary embodiment of the present invention.

The local storage unit 240 stores various kinds of data required for the operations of the client 101 (102). More particularly, in an exemplary embodiment of the present invention, the local storage unit 240 stores the shared contents.

The control unit 250 controls and processes general operations of the client 101 (102). More particularly, in an exemplary embodiment of the present invention, the control unit 250 controls the processes for storing the shared contents in the local storage unit 240 and/or the content server 103 and requesting a query of a specific content or a subscription to the specific content. The control unit 250 also controls the process for downloading the specific content from a storage location.

More particularly, in an exemplary embodiment of the present invention, the control unit 250 includes the message manager 250A. In this case, the message manager 250A generates a content list registration request message, an access rule registration request message, a query request message, and a subscription request message and outputs theses messages to the RF unit 210 and processes the message containing the metadata of the specific content that is received through the RF unit 210.

FIG. 3 is a block diagram illustrating a configuration of the information server of FIG. 1, according to an exemplary embodiment of the present invention.

The information server 104 can be an XML-based Document Management Server (XDMS) compliant with the OMA standard.

Referring to FIG. 3, the information server 104 includes an RF unit 310, a storage unit 320, and a control unit 330. The control unit 330 includes a content list manager 330A and an access rule manager 330B.

The RF unit 310 is responsible for processing radio signals to be transmitted to and received from the first and second clients 101 and 102 or the content server 103.

The storage unit 320 stores various data related to the operation of the information server 104. In an exemplary embodiment of the present invention, the storage unit 320 stores the content list created with the metadata of the shared contents and the access rule specifying the access rights of the individual clients that are received from the first client 101 or the content server 103. Although the storage unit 320 is depicted as being separate from the control unit 330 in FIG. 3, it can be integrated with the control unit 330.

The control unit 330 controls overall operations and processes of the information server 104, receives the content list and the access rule from the first client 101 and registers and manages the content list and the access rule. The control unit 330 also controls and processes the functions to search for the information queried (or subscribed) by a client.

In more detail, when the first client 101 or the content server 103 requests for registration of a content list, the control unit 330 stores the received content list in the storage unit 320 and manages the content list by means of the content list manager 330A. Afterward, if a query request for a specific content is received from the second client 102, the content list manager 330 searches for the information of the specific content in the content list stored in the storage unit 320. The control unit 330 checks the metadata including the storage location of the specific content from the content list, generates a query result message, and sends the second client 120 the query result message.

In addition, if a subscription request for a specific content is received from the second client 102, the content list manager 330A monitors to detect an update of the content list stored in the storage unit 320. When the update of the content list is detected, the content list manager 330A generates an update notification message and sends the update notification message to the second client 102.

If an access rule registration message is received from the first client 101, the control unit 330 stores the access rule received from the first client 101 and manages the access rule by means of the access rule manager 330B. The control unit 330 also generates a query result message in response to the query request or a notification message in response to the subscription request and sends the query result message or the subscription request message to the second client 102.

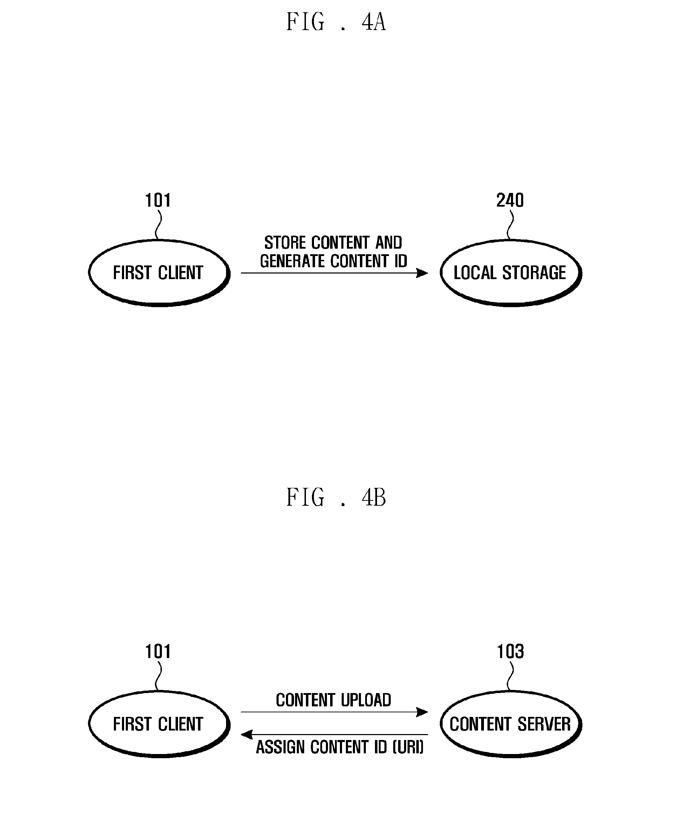

FIG. 4A is a diagram illustrating an interface between a first client and its local storage according to an exemplary embodiment of the present invention. The procedure illustrated in FIG. 4A corresponds to step S100A of FIG. 1.

After storing the shared content in its local storage 240, the first client 101 creates a content ID for identifying the shared content. The content ID can be generated in the form of a Uniform Resource Identifier (URI), such as "sip:file284583854@contentserver.com" or "http://contentserver.com/files/10721692/vacationPic.jpg". However, the format of the content ID is not limited thereto. For example, the content ID can also be generated in the form of a File Transfer Protocol (FTP) URI or other protocol URI. Afterward, the content ID is used for transmitting and receiving the corresponding content.

FIG. 4B is a diagram illustrating an interface between a first client and a content server according to an exemplary embodiment of the present invention. The procedure of FIG. 4B corresponds to step S110B of FIG. 1.

Once the first client 101 stores (uploads) the shared content within the content server 103, the content server 103 creates a content ID identifying the shared content and sends the content ID to the first client 101.

The first client 101 can use HTTP for uploading the content to the content server 103. The content ID can be generated in the form of a URI, such as "sip:file284583854@contentserver.com" or "http://contentserver.com/files/10721692/vacationPic.jpg". However, the format of the content ID is not limited thereto. For example, the content ID also can be generated in the form of a File Transfer Protocol (FTP) URI or other protocol URI. Afterward, the content ID is used for transmitting and receiving the corresponding content.

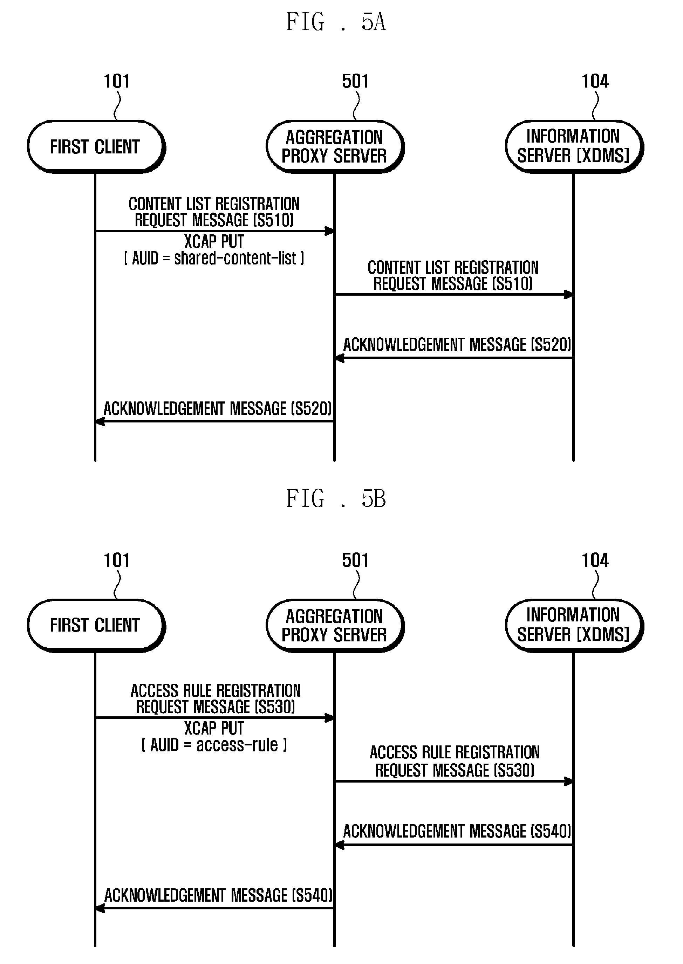

FIG. 5A is a signaling diagram illustrating a content list registration procedure in the content sharing system of FIG. 1, according to an exemplary embodiment of the present invention. The procedure of FIG. 5A corresponds to step S120A or S120B of FIG. 1.

Steps S120A and S120B are nearly identical with a difference being that either the first client 101 or the content server 103 requests the registration of the content list. Hereafter, an example of step S120A is described. With reference to the description of step S120A, step S120B, which is triggered by the content server 103, is obvious to one of skill in the art.

Here, it is assumed that the first client 101 has stored the shared content in its local storage at step S110A or the content server 103 at step S110B and received the content ID of the shared content.

In order to register the content list with the information server 104, the first client 101 generates a content list registration request message and sends the content list registration request message to the information server 104 via an aggregation proxy server 501 in step S510.

In an exemplary embodiment of the present invention, the content list registration request message can be an XML Configuration Access Protocol (XCAP) message (XCAP PUT (AUID=Shared-content-list)). The XCAP is a configuration access protocol used to register configuration information of a specific application service with an XCAP server and allows an XCAP client to manage the configuration information. In this case, the user information per application stored in the XCAP server is stored in eXtensible Markup Language (XML) format, and the XCAP client accesses the server using HTTP.

The content list (AUID=Shared-content-list) may be formatted as shown in table 1.

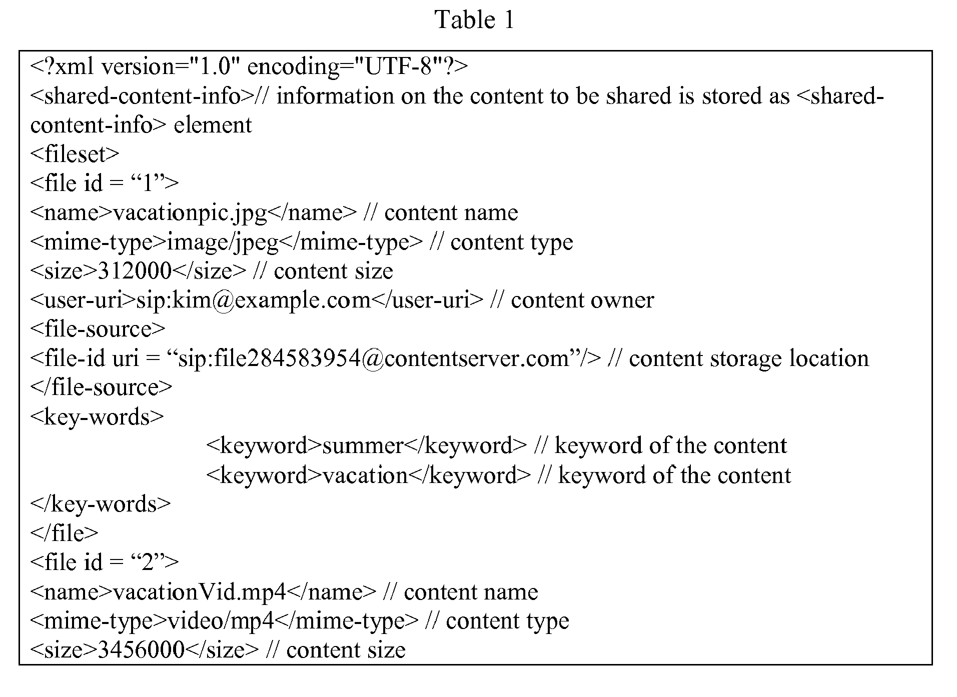

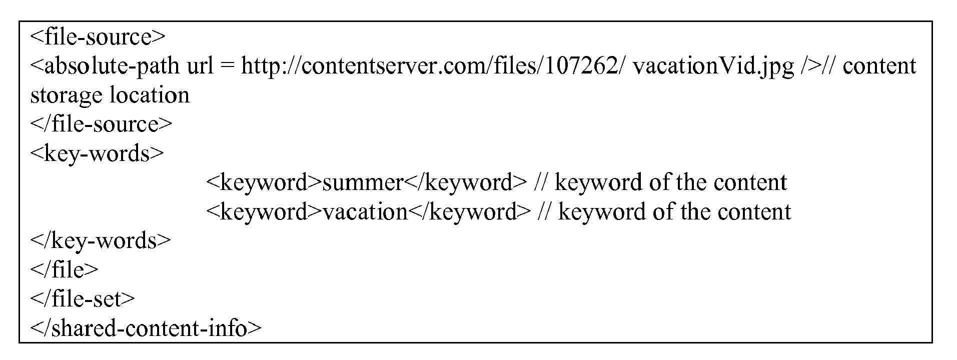

As shown in table 1, the content list (AUID=Shared-content-list) contains the metadata of the shared content that is defined <shared-content-info> tags. The <shared-content-info> tags may contain a plurality of <fileset> tag pairs, and each <fileset> tag pair contains a plurality of <file id> tag pairs for identifying individual contents. The <file id> tag pair contains metadata such as content name, content size, content owner, storage location, and keyword.

In table 1, <file id=1> tag pair shows information on the first shared content of the first client 101, i.e. content name is 'vacation.jpg', content type is 'image', content size is '312000 bytes', contents owner is 'sip:kim@example.com', content location is 'sip:file284583954@contentserver.com', and keyword is 'summer' and 'vacation'.

Upon receipt of the content list registration request message (XCAP PUT (AUID=Shared-content-list), the information server 104 stores the content list in the storage unit 320 and registers the content list by client. Next, the information server 104 sends an acknowledgement message to the first client 101 via the aggregation proxy server 501 in response to the content list registration request message (AUID=Shared-content-list) in step S520.

FIG. 5B is a signaling diagram illustrating an access rule registration procedure in the content sharing system of FIG. 1, according to an exemplary embodiment of the present invention. The procedure of FIG. 5B corresponds to step S120A of FIG. 1.

After receiving the acknowledgement message from the information server 104 in response to the content list registration request message, the first client 101 generates an access rule registration request message for configuring a content access right for individual clients and sends the access rule registration request message to the information server 104 via the aggregation proxy server 501 in step S530. In an exemplary embodiment of the present invention, the access rule registration request message can be an XCAP message (XCAP PUT (AUID=access-rule)). The access rule (AUID=access-rule) may be formatted as shown in table 2.

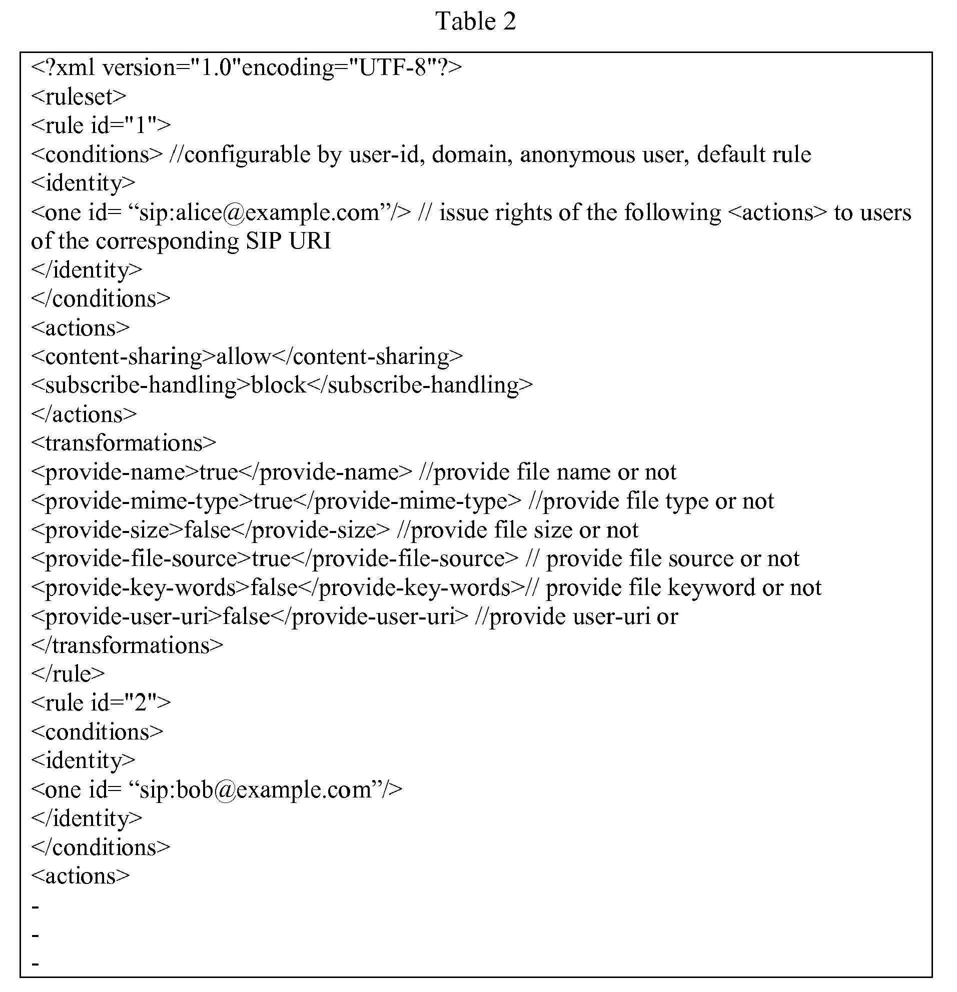

As shown in table 2, the access rule (AUID=access-rule) may include a <ruleset> tag, and the <ruleset> tag may include multiple <rule id> tags. The <rule id> tag can be set with an access right range <conditions>, an access right type <actions>, and access information <transformations>.

The access right range <conditions> tag specifies whether to share the content with a specific client (User ID), whether to share the content with clients of a specific domain (Domain), whether to share the content with an anonymous client (Anonymity), and whether to share the content with all the clients authorized by the aggregation proxy server.

The access right type <actions> tag specifies which of query and subscription schemes is used to share the contents. In more detail, when both the query and the subscription requests are allowed, the query result includes <shared-content-info> tag and the subscription is accepted. When the query request is allowed and the subscription request is blocked, the query result includes <shared-content-info> and the subscription is rejected. When the query request is blocked and the subscription request is accepted, the query result does not include <shared-content-info> tag and the subscription is accepted. When both the query and subscription requests are blocked, the query result does not include <shared-content-info> and the subscription is rejected.

The access information <transformations> tag specifies the metadata items to be contained in the query result such as content name, content type, content size, content storage location, keyword, and content owner.

Upon receipt of the access rule registration request message (XCAP PUT (AUID=access-rule)), the information server 104 stores and registers the received access rule by client. Next, the information server 104 sends an acknowledgement message to the first client 101 via the aggregation proxy server 501 in response to the access rule registration request message (XCAP PUT (AUID=access-rule)).

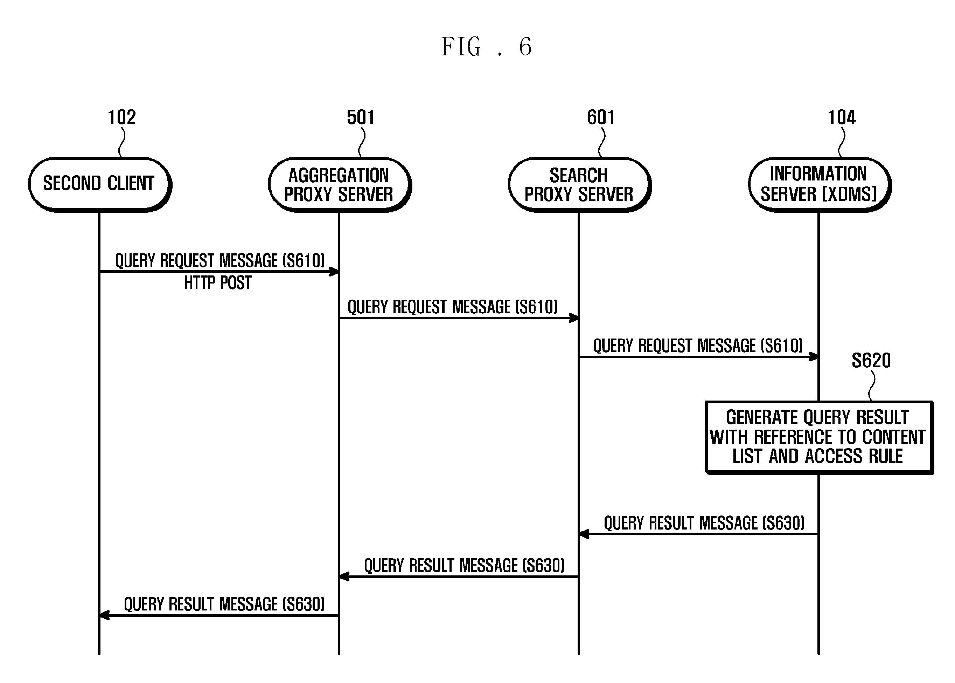

FIG. 6 is a signaling diagram illustrating a query procedure in the content sharing system of FIG. 1, according to an exemplary embodiment of the present invention. In the query procedure, the second client 102 sends a query request message to the information server 104 and receives the query result from the information server 104. The procedure of FIG. 6 corresponds to step S130A of FIG. 1.

The second client 102 sends a query request message to the information server 104 via an aggregation proxy server 501 and a search proxy server 601 in step S610.

In an exemplary embodiment of the present invention, the query request message can be an HTTP POST message. The query request message may be formatted as shown in table 3.

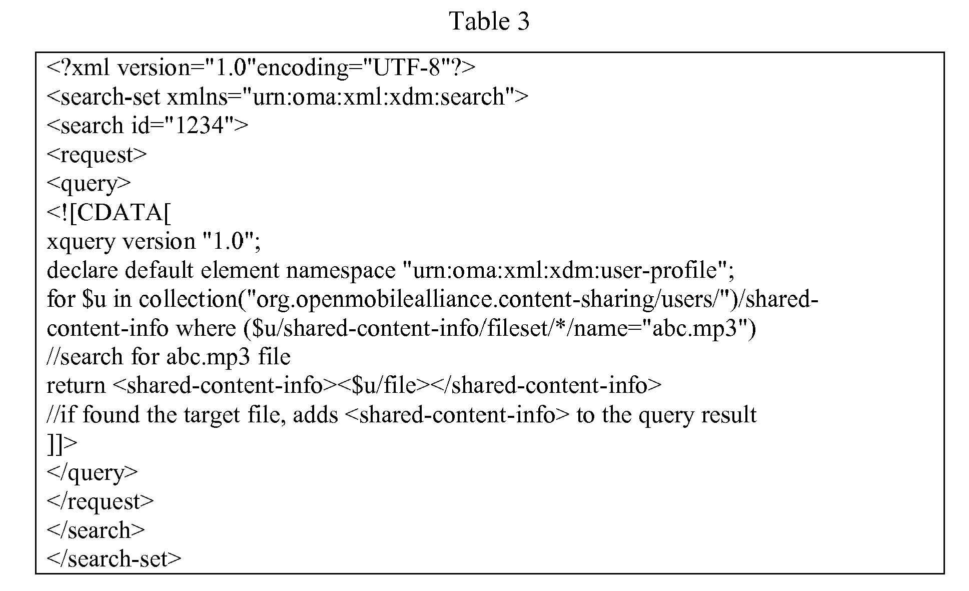

As shown in table 3, the query request message may include a "where" phrase for the query of a specific file and a "return" phrase to acquire the query result. As an exemplary query request message transmitted by the second client 102, the query request message of the table 3 includes the phrases 'where ($u/shared-content-info/fileset/*/name="abc.mp3")' to query the location of the file 'abc.mp3' and 'return <shared-content-info>' to request the query result.

Upon receipt of the query request message, the information server 104 searches the content list for the specific content requested by the second client 102. The information server 104 also checks the access rule of the content list to inspect whether the second client 102 has the access right issued by the owner of the content list. When it is determined that the second client 102 has the access right to the content list, the information server 104 generates a query result message containing the metadata of the content in step S620. Next, the information server 104 sends the query result message to the second client 102 via the search proxy server 601 and the aggregation server 501 in step S630.

The search result message may be formatted as shown in table 4.

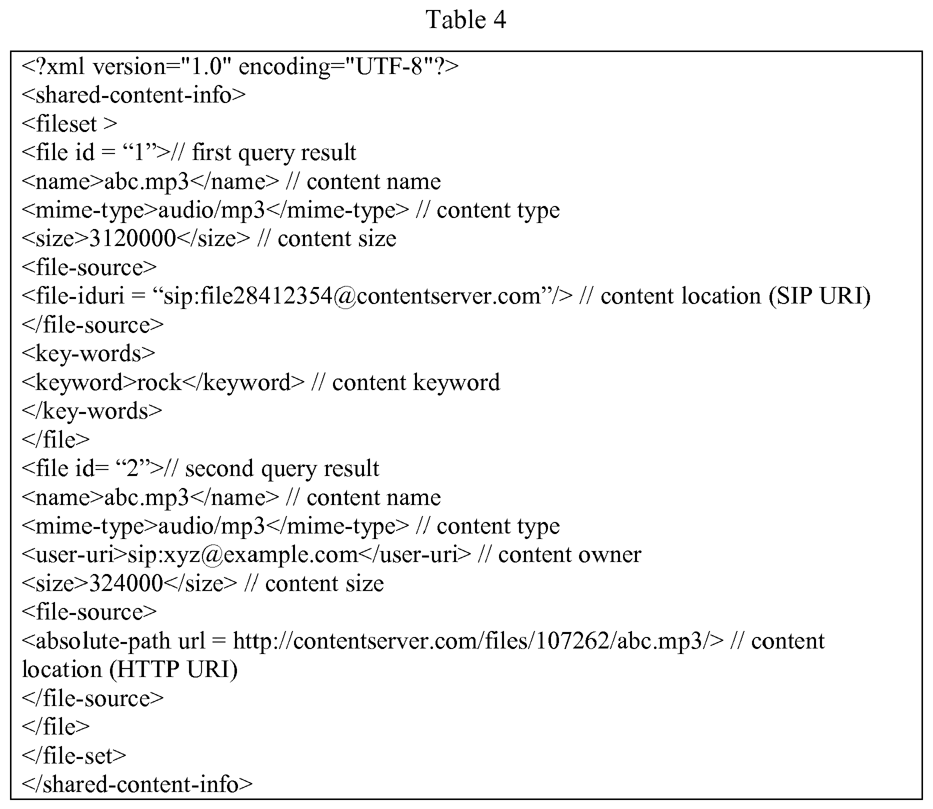

As shown in table 4, the query result message may include the <shared-content-info> tag pair containing information on the file 'abc.mp3' queried by the second client 102 in the form of <fileset> tag pairs, each contains metadata of the found files. The query result message of table 4 shows that two 'abc.mp3' files are found. The metadata of the first 'abc.mp3' file includes content name, content type, content size, content location, and content keyword. The metadata of the second 'abc.mp3' file includes content name, content type, content owner, content size, and content location. The reason there is a difference between metadata of identical content is because the owners (i.e., the first clients 101) of the content provide different access rules.

In the above described manner, the second client 102 can request a query of a specific content and checks the metadata of the content found as the query result.

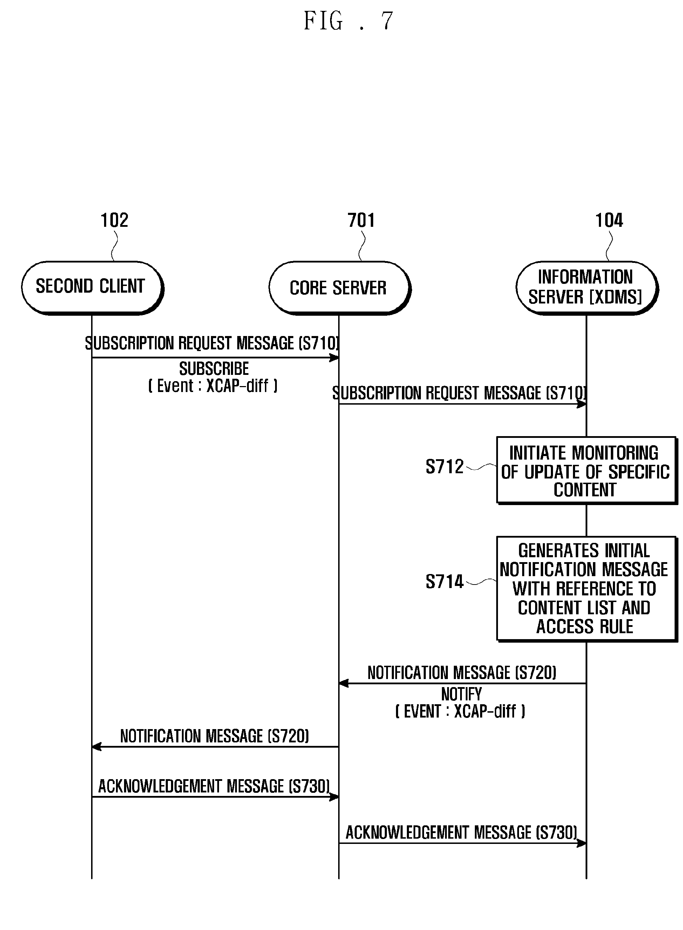

FIG. 7 is a signaling diagram illustrating a subscription procedure in the content sharing system of FIG. 1, according to an exemplary embodiment of the present invention. In the subscription procedure, the second client sends a subscription request message to the information server 104 and receives a notification message from the information server 104. The procedure of FIG. 7 corresponds to step S130B of FIG. 1.

The second client 102 sends a subscription request message to the information server 104 via a core server 701 in step S710. The core server 701 can be an SIP/IP Core server compliant with the OMA standard. In an exemplary embodiment of the present invention, the subscription request message can be a SUBSCRIBE message (SUBSCRIBE(Event:xcap-diff)).

The subscription procedure between the second client 102 and the information server 104 can be performed in two manners, namely a subscription with list update trigger notification in which the information server 104 notifies the second client 102 of the update of the content list whenever the first client 101 updates the content list by adding a new content, and a subscription with content update trigger notification in which the information server 104 notifies the second client 102 of the update of a content whenever the first client 101 updates the content.

The subscription request message (SUBSCRIBE(Event:xcap-diff)) for the subscription with list update trigger notification may be formatted as shown in table 5.

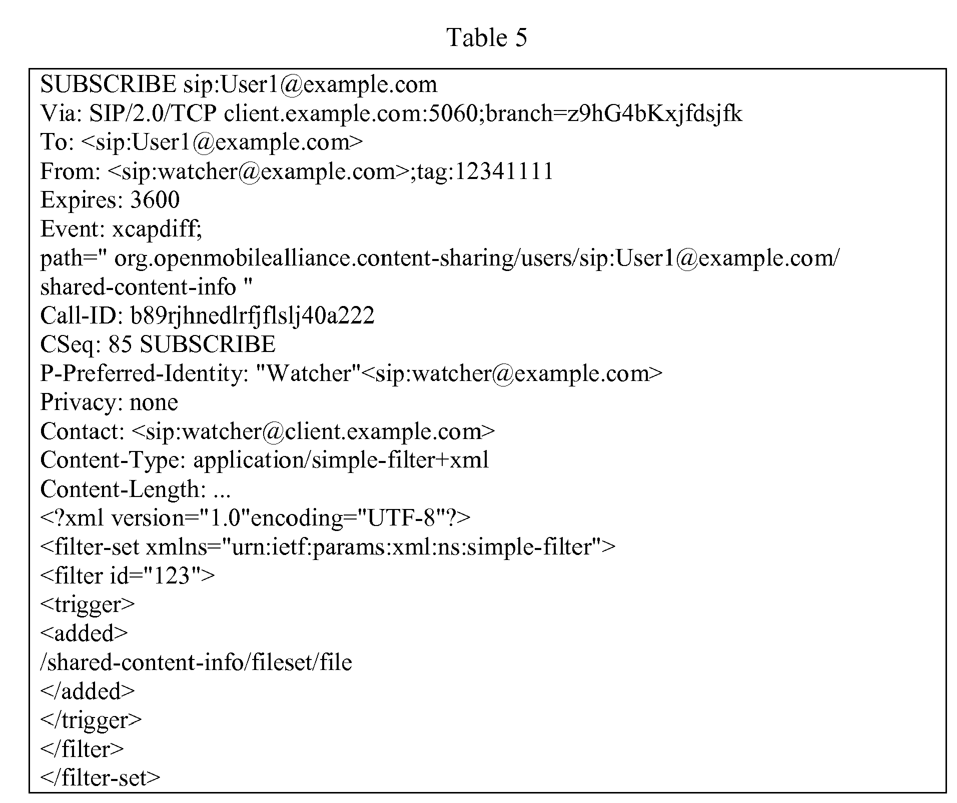

In table 5, the <trigger> tag pair defines an element for setting the list update trigger notification such that the information server 104 notifies of the content list update when the first client 101 adds a new content to the content list. In this case, when the first client 101 updates the content list by adding a new content item (see 'shared-content-info/fileset/file'), the information server 104 generates the notification message.

Although the exemplary subscription request message in table 5 is formatted so as to notify of the content list update by a specific client ('sip:Userl@example.com'), it is obvious to one of skill in the art that the subscription request message can be formatted in order for the information server 104 to notify of the content list update when all the content lists stored in the information server 104 are updated.

The subscription request message (SUSCRIBE(Event:xcap-diff)) for the subscription with content update trigger notification may be formatted as shown in table 6.

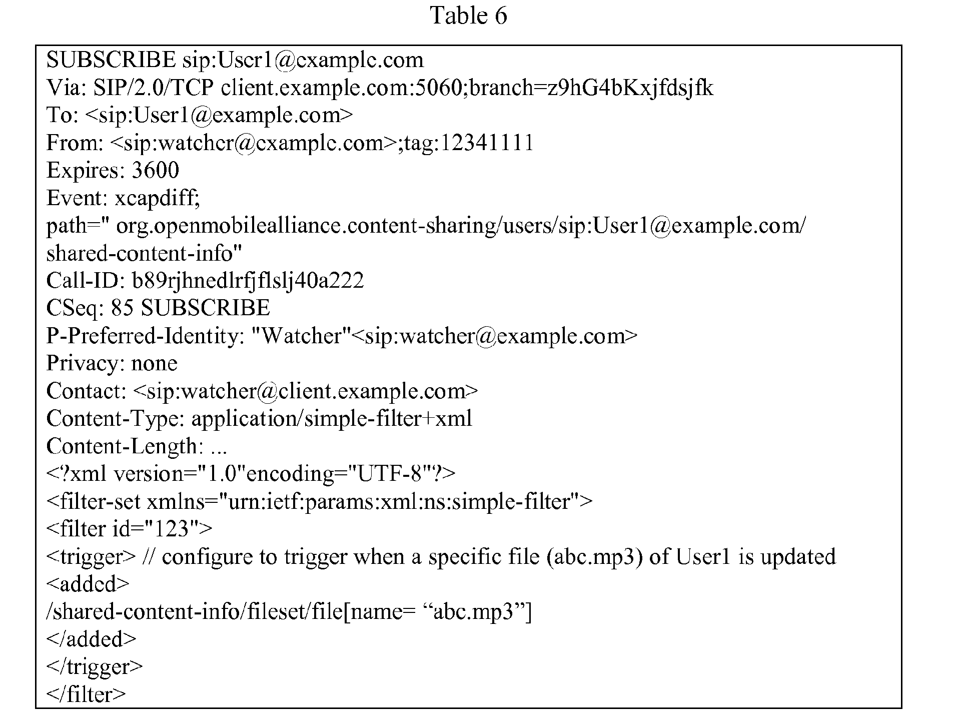

In table 6, the <trigger> tag pair defines an element for setting the content update trigger notification such that the information server 104 notifies of the content update when the first client 101 updates a content in the content list. In an exemplary case, when the first client 101 updates the content 'abc.mp3' in the content list ('shared-contentinfo/fileset/file[name= "abc.mp3"]'), the information server 104 generates the notification message.

Upon receipt of the subscription request message (SUBSCRIBE(Event:xcap-diff)), the information server 104 monitors to detect an update of the content subscribed to by the second client 102 in step S712. If an update of the content is detected, the information server 104 notifies the second client 102 of the update of the content.

In addition, the information server 104 that received the subscription request message (SUBSCRIBE(Event:xcap-diff)) searches for the content list including the content indicated by the subscription request message in order to initially respond to the subscription request message (SUBSCRIBE(Event:xcap-diff)). The information server 104 also checks the access rule of the content list for determining whether the second client 102 has the access right issued by the owner of the found content list and generates an initial notification message in step S714.

Next, the information server 104 sends the initial notification message to the second client 102 via the core network 701 in step S720. The initial notification message can be a NOTIFY message (NOTIFY(Event:xcap-diff)). The format of the NOTIFY message is described further below. Upon receipt of the notification message (NOTIFY(Event:xcap-diff)), the second client 102 sends an acknowledgement message to the information server 104 via the core server 701 in step S730.

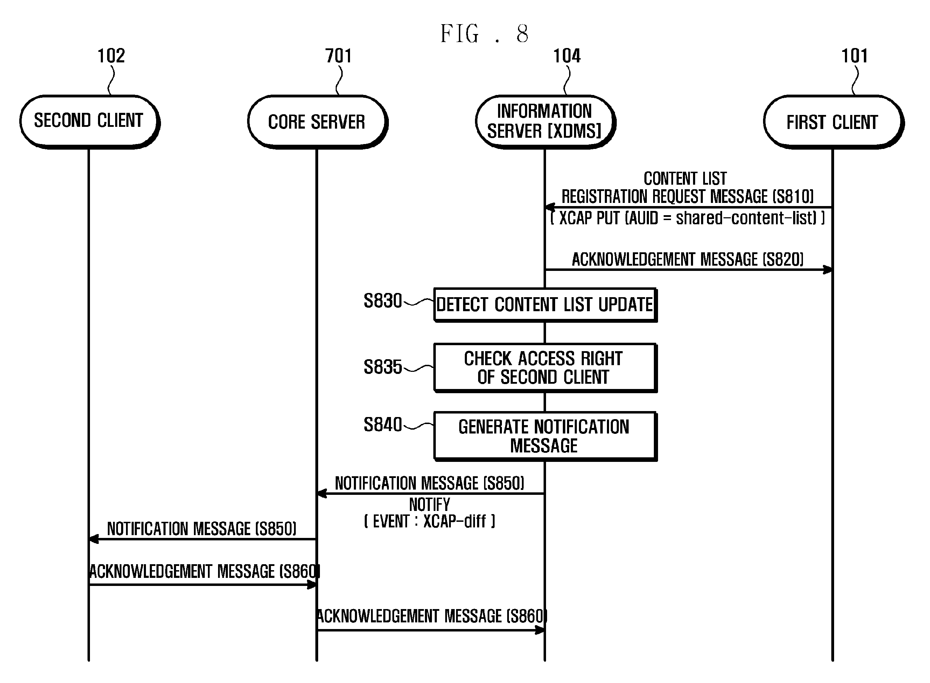

FIG. 8 is a signaling diagram illustrating an update notification procedure in the content sharing system of FIG. 1, according to an exemplary embodiment of the present invention. In the update notification procedure, when an update of the content subscribed to by the second client 102 is detected, the information server 104 notifies the second client 102 of the update of the content. The procedure of FIG. 8 corresponds to step S130B of FIG. 1.

The first client 101 sends a content list registration message to the information server 104 in step S810. Step S810 of FIG. 8 is nearly identical with step S510 of FIG. 5A. Here, the content list registration request message can be an XCAP message (XCAP PUT(AUID=shared-content-list)). The content list may be formatted as shown in table 1. The information server 104 sends an acknowledgement message to the first client 101 in response to the content list registration request message (XCAP PUT(AUID=shared-content-list)) in step S820.

Next, the information server 104 monitors to detect an update of the content list subscribed to by the second client 102 in step S830. If an update of the content list is detected at step S830, the information server 104 checks the access rule registered by the first client 101 and checks the access right of the second client 102 to the content list with reference to the access rule in step S835. Next, the information server 104 generates a notification message (NOTIFY(Event:xcap-diff)) containing the metadata of the updated content in step S840 and sends the notification message to the second client 102 via the core server 701 in step S850.

The notification message (NOTIFY(Event:xcap-diff)) may be formatted as shown in table 7.

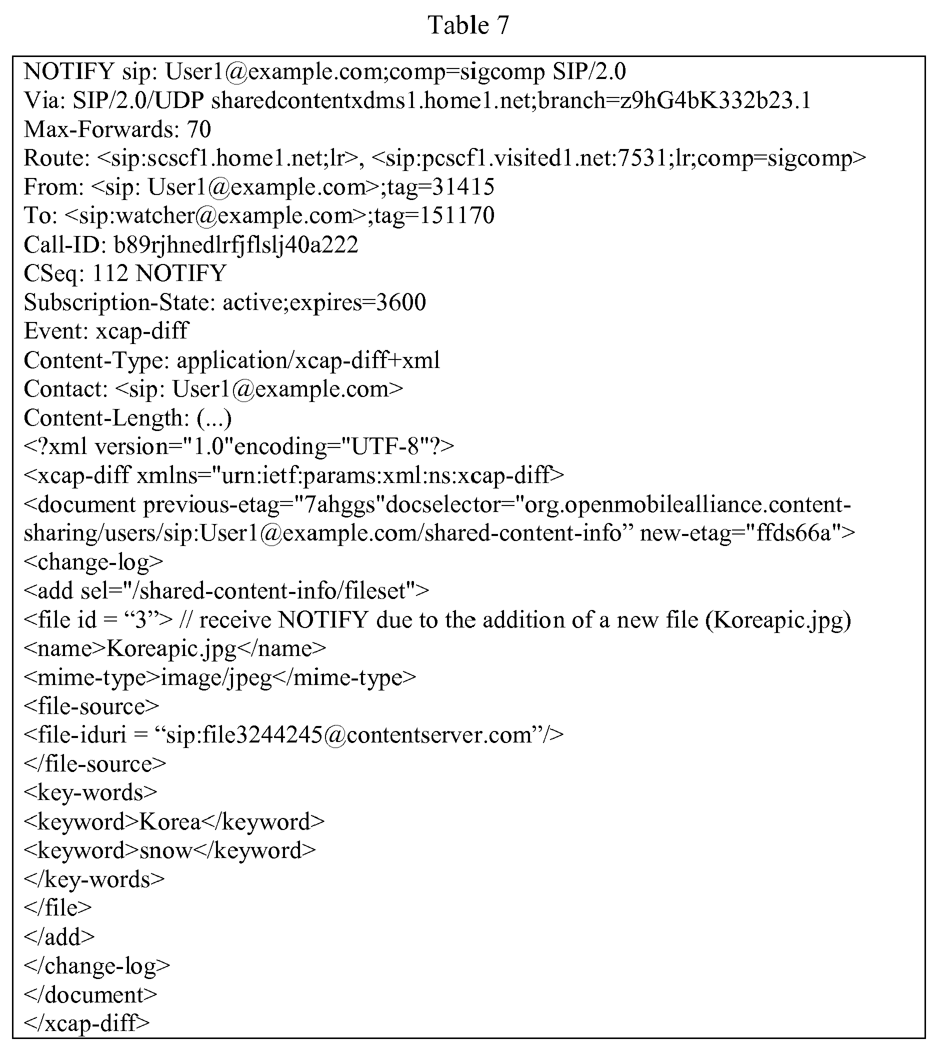

As shown in table 7, a notification message (NOTIFY(Event:xcap-diff)) contains the information to be notified to the second client 102 as a new content is added to the content list of the first client 101. From the notification message, it is possible to obtain information on the content 'Koreapic.jpg', which is newly added to the content list of the first client 101, such as content type, content location, and content keyword.

Upon receipt of the notification message (NOTIFY(Event:xcap-diff)), the second client 102 sends an acknowledgement message to the information server 104 via the core server 701 in step S860.

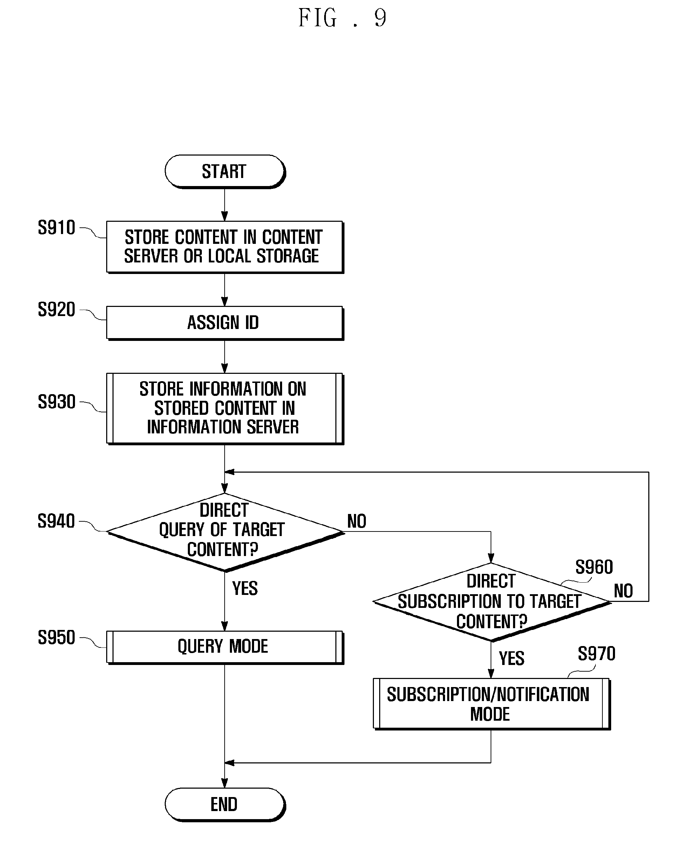

FIGs. 9 to 12 are flowcharts illustrating a content sharing method and procedures constituting the content sharing method corresponding to FIGs. 5 to 8, according to exemplary embodiments of the present invention. The formats of the messages for use in the content sharing method of the present invention have been already described above, and thus are not described hereinbelow.

FIG. 9 is a flowchart illustrating a content sharing method according to an exemplary embodiment of the present invention. In this exemplary embodiment, the second client 102 shares the contents of the first client 101 through a direct query or subscription request.

The first client 101 first stores the content to be shared within its local storage or the content server 103 in step S910. Next, the first client 101 assigns a content ID to the stored content in step S920. When the content is stored in the local storage, the first client 101 assigns the content ID. When the content is stored in the content server 103, the content server 103 assigns the content ID.

The first client 101 or the content server 103 sends a content list registration request message and access rule registration request message to the information server 104. Upon receipt of the content list registration request message and access rule registration request message, the information server 104 stores the content list and access rule extracted from the messages by client in step S930.

After storing the content list and access rule, the information server 104 detects a message transmitted by the second client 102 and determines whether the message is a query request message for a specific content in step S940.

If the message is a query request message, the information server 104 runs a query mode in step S950. Otherwise, if the message is not a query request message, the information server 104 determines whether the message is a subscription request message in step S960. If the message is a subscription request message, the information server 104 runs a subscription/notification mode in step S970.

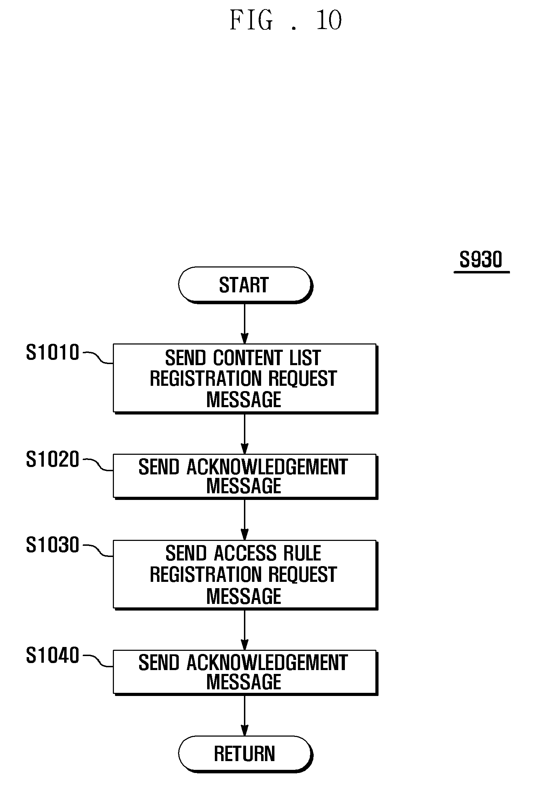

FIG. 10 is a flowchart illustrating the content list registration procedure of FIG. 9, according to an exemplary embodiment of the present invention. The content list registration procedure in step S930 of FIG. 9, in which the first client 101 sends the content list to the information server and the information server 104 registers the content list, is described hereafter in more detail.

After the first client 101 first stores the specific content in its local storage or the content server 103, and the first client 101 or the content server 103 assigns a content ID to the content, a content list is created by first client 101 or the content server 104. The first client 101 or the content server 103 sends a content list registration request message to the information server in step S1010. The content list registration request message may contain metadata such as content name, content type, content size, content owner, content location, and content keyword. Upon receipt of the content list registration request message, the information server stores the content list by client and sends an acknowledgement message to the first client 101 in step S 1020.

Next, the first client 101 sends an access rule registration request message to the information server 104 in step S1030. The access rule registration request message may contain the metadata such as access right range, access right type, access information type. The information server 104 sends an acknowledgement message to the first client 101 in response to the access rule registration request message in step S1040.

Although the access rule registration request message is described as being sent after the content list registration request message in FIG. 10, the message transmission order is an exemplary case for registering the content list and the access rule, and the invention is not limited thereto. For example, the first client 101 can send the access rule registration request message followed by the content list registration request message or send the content list registration request message and the access rule registration request message simultaneously or separately.

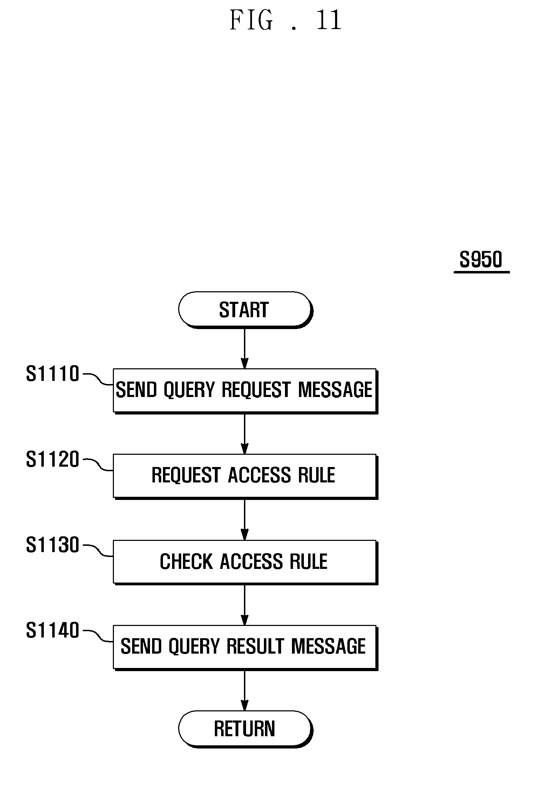

FIG. 11 is a flowchart illustrating a query mode operation procedure of FIG. 9, according to an exemplary embodiment of the present invention. The query mode procedure in step S950 of FIG. 9 in which the second client 102 requests a query of a specific content is described in more detail.

The second client 102 can send a query request message to the information server 104 to search for a specific content in step S1110. If a query request message is received, the content list manager 330A of the information server 104 checks the content indicated by the query request message and searches for the content list having the content among the content lists stored by client. Next, the content list manager 330A requests, from the access rule manager 330B, the access rule related to the found content list in step S1120. In response to the request from the control list manager 220A, the access rule manager 330B sends the corresponding access rule to the content list manager 330A in step S 1130. Finally, the information server 104 generates a query result message that only includes the metadata of the content that the second client 102 is permitted to access and sends the query result message to the second client 102 in step S1140. The query result message can contains the metadata such as content name, content type, content size, content location, and content keyword.

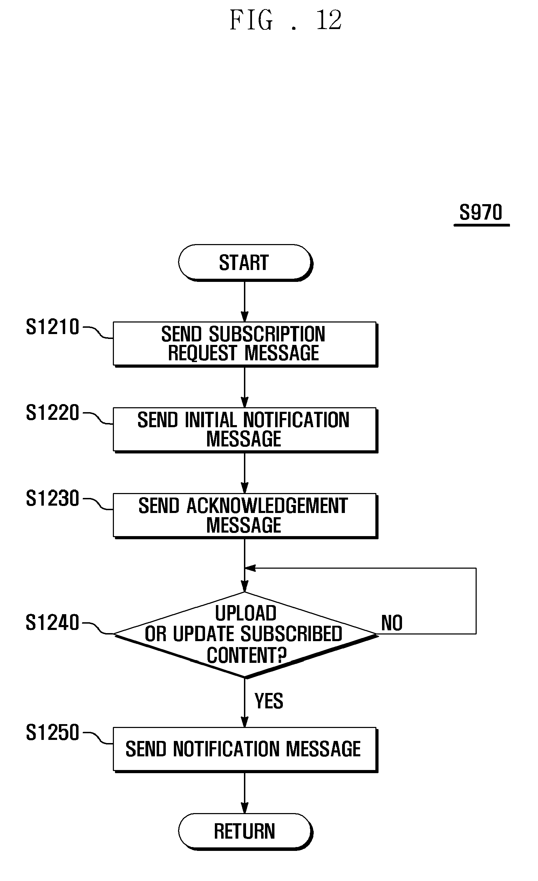

FIG. 12 is a flowchart illustrating a subscription mode operation procedure of FIG. 9, according to an exemplary embodiment of the present invention. The subscription mode procedure in step S970 of FIG. 9, in which the second client 102 requests a subscription to a specific content and receives a notification of an update of the content, is described hereafter in more detail.

The second client 102 sends a subscription request message to the information server 104 to subscribe to a specific content in step S1210. The content subscription can be any of the subscription with list update trigger notification and the subscription with content update trigger notification. Upon receipt of the subscription request message, the information server 104 initiates monitoring of the content subscribed to by the client 102 and sends an initial notification message to the second client 102 in step S1220. The second client 102 sends an acknowledgement message to the information server 104 in response to the initial notification message in step S1230.

While monitoring the content, the information server 104 determines whether an update of the content subscribed to by the second client 102 is detected in step S1240. If an update of the content subscribed to by the second client 102 is detected, the information server 104 generates a notification message and sends the notification message to the second client 102 in step S1250. The notification message can contain the metadata of the content such as content type, content location, and content keyword.

### Second Exemplary Embodiment

A content sharing method according to a second exemplary embodiment of the present invention is described hereafter with reference to FIGs. 13 to 18.

FIG. 13 is a diagram illustrating a framework of a content sharing system according to a second exemplary embodiment of the present invention. As illustrated in FIG. 13, the content sharing system includes a first client 101, a second client 102, a content server 103, an information server 104, and a presence server 1301.

Since the first and second client 101 and 102 and the content and information servers 103 and 104 are nearly identical with those described with reference to FIG. 1 in operation, detailed explanations thereof are omitted in the description of this exemplary embodiment.

The presence server 1301 can gather and store status information of the clients and create presence information of individual clients from the status information. The presence server 1301 and presence information can be compliant with the OMA standard. In an exemplary embodiment, when a subscription request is received from the second client 102, the presence server 1301 can notify the second client of a content update using the presence information including the update information.

Hereinafter, how the second client 102 requests the presence server 1301 for a subscription and how the presence server 1301 notifies the second client 102 of the subscription result are described. Since steps S1310A, S1310B, S1320A, and S1320B of FIG. 13 are nearly identical with steps S110A, S110B, S120A, and S120B of FIG. 1 in operation, detailed descriptions thereof are omitted in the description of this exemplary embodiment.

Unlike step S120 of FIG. 1 in which the first client 101 sends the access rule to register with the information server 104, the first client 101 sends a presence rule (pres-rule) to the information server 104. The information server 104 receives the presence rule and sends the presence rule to the presence server 1301 to be registered. In the second exemplary embodiment, the presence rule is registered with and managed by the presence server 1301.

The presence rule may be formatted similar to the exemplary access rule shown in table 2 as an example, but the query-related tags <actions>, </actions>, <content-sharing>, and <content-sharing> are not used.

The difference between the two frameworks of the first and second exemplary embodiments is that in the second exemplary embodiment the second client 102 performs the subscription process with the presence server 1301 whereas in the first exemplary embodiment the second client 102 performs the subscription process with the information server 104.

That is, the second client 102 requests the subscription of a specific content to the presence server 1301 in step S1330 in this exemplary embodiment. When the content list is updated within the information server 104, the information server 104 can notify of the update of the content list to the presence server in step S1340A or publish the updated content list in step S1340B. In response to the notification or publishing of the update, the presence server 1301 notifies the client 102 of the content list update in step S1350.

With the content list update notification, the second client 102 can download the content from the local storage of the first client 101 in step S1360B or the content server 103 in step S 1360A using a protocol such as MSRP and HTTP.

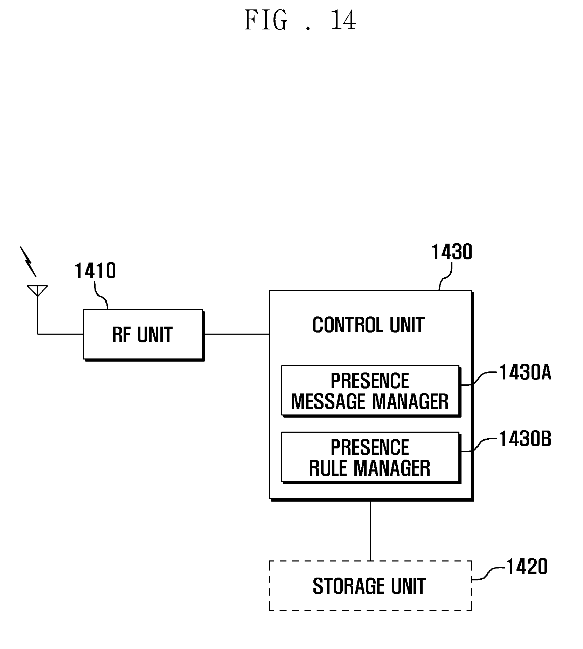

FIG. 14 is a diagram illustrating a configuration of the presence server of FIG. 13, according to an exemplary embodiment of the present invention.

Referring to FIG. 14, the presence server 1301 includes an RF unit 1410, a storage unit 1420, and a control unit 1430. The control unit 1430 can include a presence message manager 1430A and a presence rule manager 1430B.

The RF unit 1410 is responsible for processing radio signals to be transmitted to and received from the information server 104 and the second client 102.

The storage unit 1420 can store various data required for operation of the presence server 1301. The storage unit 1420 can also store the presence rule (pres-rule) specifying access rights. Although the storage unit 1420 is depicted as being separate from the control unit 1430 in FIG. 14, the storage unit 1420 can be integrated with the control unit 1420 in another exemplary embodiment of the present invention.

The control unit 1430 controls overall operations and processes of the presence server 1301 and registers and manages presence rules of individual clients. The control unit 1430 also receives the subscription request from the second client 102 and notifies the second client 102 of the update of the subscribed content with the presence information carrying the metadata of the content.

The presence message manager 1430A processes the presence list subscription request message received from the second client 102 and requests the presence rule manager 1430B for an appropriate presence rule. The presence message manager 1430A also controls a series of processes for sending a notification message to the second client 102 when the target content is modified or updated. The presence rule manager 1430B manages the presence rules stored in the storage unit 1420.

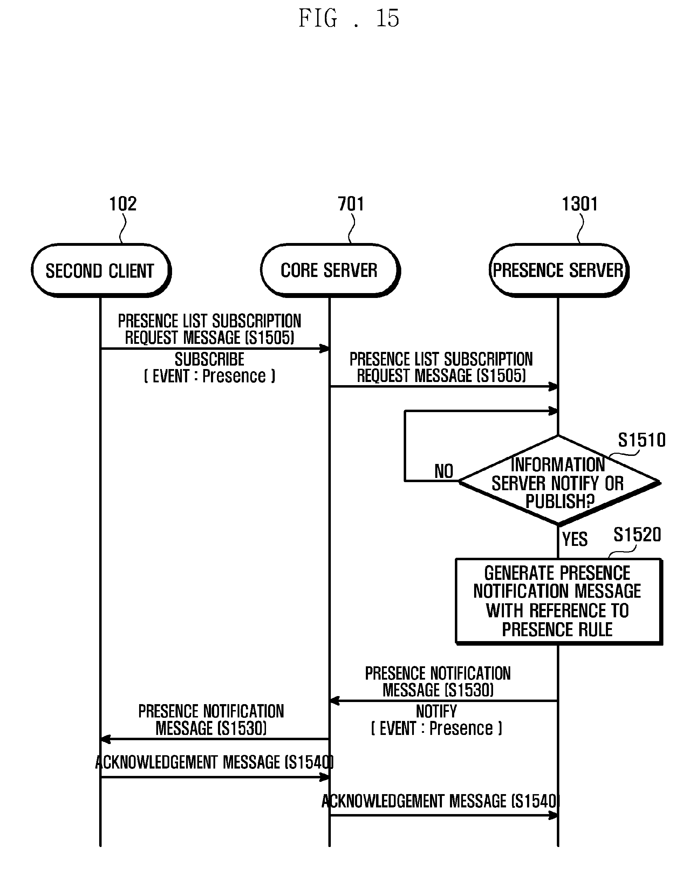

FIG. 15 is a signaling diagram illustrating a subscription procedure in the content sharing system of FIG. 13, according to an exemplary embodiment of the present invention. In the subscription procedure, the second client 102 requests the presence server 1301 for a subscription of a presence list, and the presence server 1301 notifies the second client 102 of the subscription result. The procedure of FIG. 15 corresponds to step S1330 and S1350 of FIG. 13.

The second client 102 sends a presence list subscription request message to the presence server 1301 via a core server 701 in step S1505. The presence subscription message can be a SUBSCRIBE message (SUBSCRIBE(Event"presence)) which is formatted as shown in table 8.

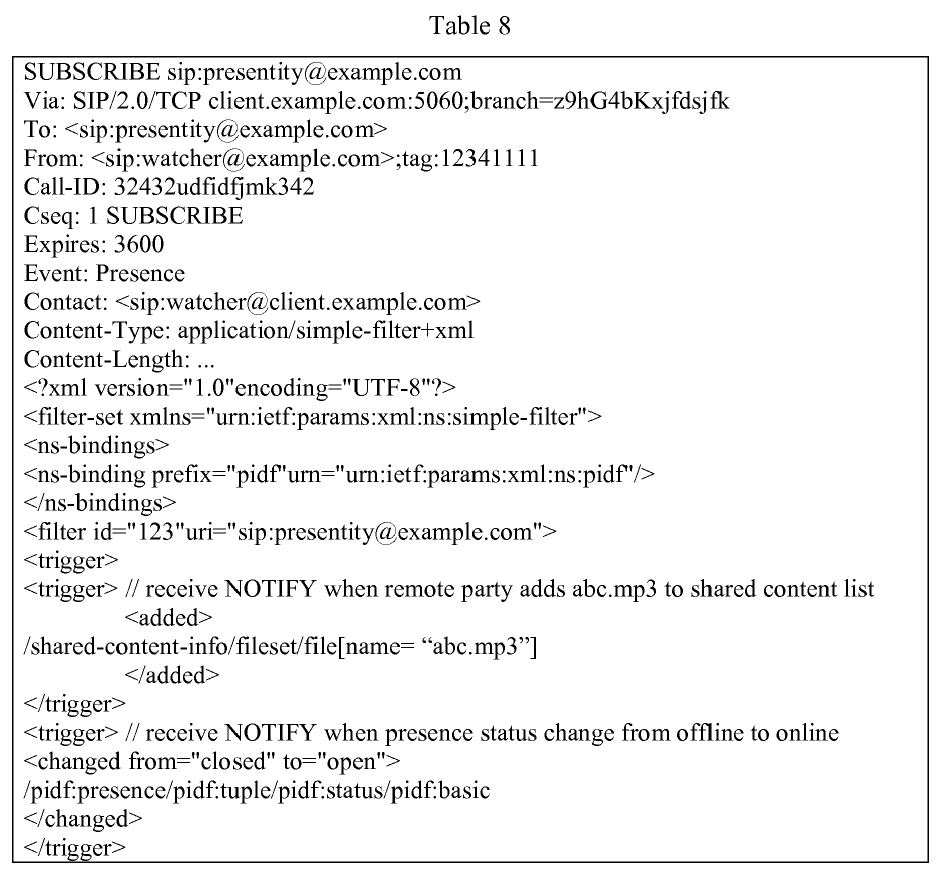

As shown in table 8, the presence list subscription request message is formatted such that the second client receives a notification when a specific content is added or when the presence status of a specific client is changed to online. With the presence list subscription request message, the second client 102 requests the presence server 1301 to notify when the specific client adds 'abc.mp3' (see '/shared-content-info/fileset/file[name= "abc.mp3"]' defined with tags <added> and </added>) or when the presence status of the specific client changes from offline to online (see '/pidf:presence/pidf:tuple/pidf:status/pidf:basic' defined with tags <changed from="closed" to="open"> and </changed>).

Upon receipt of the presence list subscription request message (SUBSCRIBE(Event:presence)), the presence server 1301 initiates monitoring of notification and publishing of the information server 104 in step S1510. If a notification or publishing of the information server 104 is detected, the presence server 1301 checks the access right of the second client 102 to a specific content and generates a presence notification message (NOTIFY(Event:presence)) containing metadata of the subscribed content in step S 1520. The presence notification message can be formatted such that the presence information compliant to the OMA standard includes the metadata of the subscribed content. The presence notification message is described in more detail further below.

Next, the presence server 1301 sends the presence notification message to the second client 102 via the core server 701 in step S1530. Upon receipt of the presence notification message, the second client 102 sends an acknowledgement message to the presence server 1301 via the core server 701 in step S 1540.

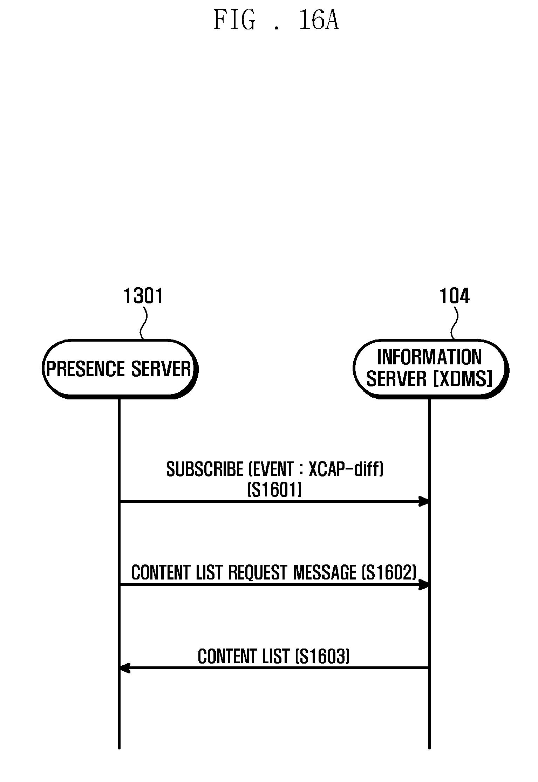

FIG. 16A is a signaling diagram illustrating a content list acquisition procedure in the content sharing system of FIG. 13 according to an exemplary embodiment of the present invention. In the content list acquisition procedure, the presence server 1301 forwards the presence list subscription request message received from the second client 102 to the information server 104 to request the content list from the information server 104.

In the second exemplary embodiment, when the content list stored in the information server 104 is updated, the information server 104 can notify or publish the updated content list to the presence server 1301 such that the information server 104 and the presence server 1301 are synchronized with each other. FIG. 16A shows an exemplary embodiment in which the information server 104 notifies of the presence server 1301 of the updated content list.

If a presence list subscription request message (SUBSCRIBE(Event:presence)) is received from the second client 102, the presence server 1301 converts the presence list subscription request message (SUBSCRIBE(Event:presence)) into a subscription request message (SUBSCRIBE(Event:XCAP-diff)) and sends the subscription request message (SUBSCRIBE(Event:XCAP-diff)) to the information server 104 in step S1601. The subscription request message (SUBSCRIBE(Event:XCAP-diff)) may be formatted as shown in table 5. Afterward, the subscription request message (SUBSCRIBE(Event:XCAP-diff)) can be used when the information server 104 notifies the presence server 1301 of the update of a specific content.

After sending the subscription request message (SUBSCRIBE(Event:XCAP-diff)), the presence server 1301 checks the access right of the second client 102 with reference to the presence rule. In order to generate an initial presence notification message as the reply to the subscription request, the presence server 1301 requests from the information server 104 the content list in step S1602. Upon receipt of the content list request, the information server 104 sends the requested content list to the presence server 1301 in step S1603. How the presence server 1301 generates the presence notification message and sends the presence notification message to the second client 102 is nearly identical with that described with reference to FIG. 15.

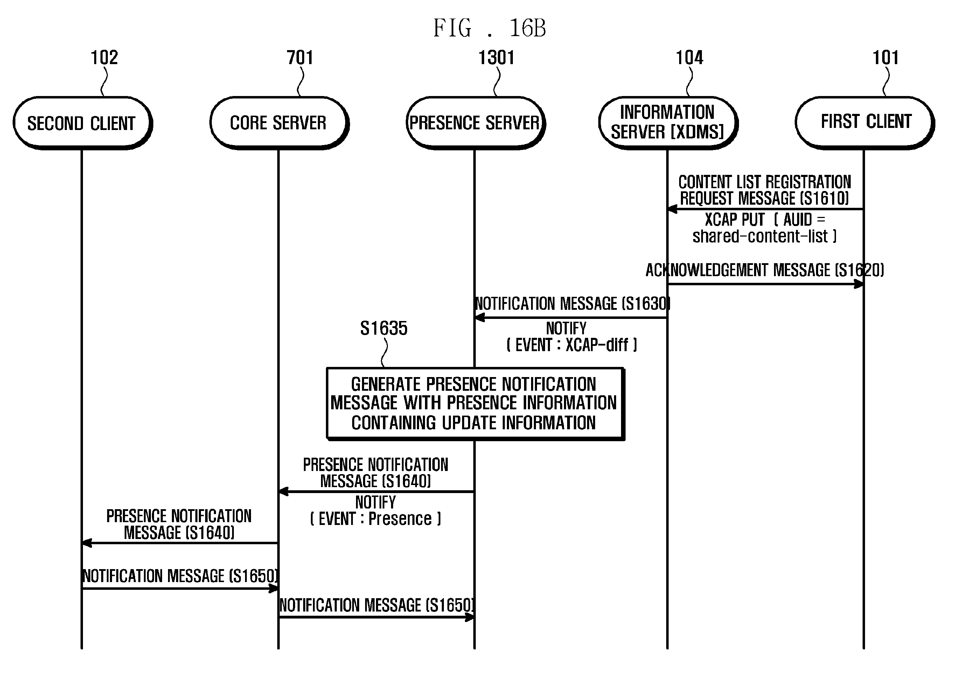

FIG. 16B is a signaling diagram illustrating a content list update notification procedure in the content sharing system of FIG. 13, according to an exemplary embodiment of the present invention. In this content list update notification procedure, when the first client's content list registered with the information server 104 is updated, the information server 104 notifies the second client 102 of the update of the content list. This procedure of FIG. 16B corresponds to steps S 1320A, S 1340A, and S 1350 of FIG. 13.

The first client 101 sends a content list registration request message (XCAP PUT(AUID=Shared-content-list)) to the information server 104 for storing the metadata of a shared content in step S1610. This process is nearly identical with that described with reference to FIG. 5A. Upon receipt of the content list registration request message (XCAP PUT(AUID=Shared-content-list)), the information server 104 sends an acknowledgment message to the first client 101 in step S1620.

Next, the information server 104 generates a notification message and sends the notification message to the presence server 1301 to notify the update of the content list in response to a subscription request message in step S1630. The notification message may be the NOTIFY message (NOTIFY(Event:xcap-diff)) described with reference to FIG. 8.

Upon receipt of the notification message, the presence server 1301 extracts the metadata of the updated content from the notification message (NOTIFY(Event:xcap-diff)) and generates a presence notification message (NOTIFY(Event:presence)) with the metadata in step S1635. In an exemplary embodiment, the presence notification message can be formatted in the form of presence information, which is specified in the OMA standard, with the update information. In this case, the presence notification message (NOTIFY(Event:presence)) may be formatted as shown in table 9.

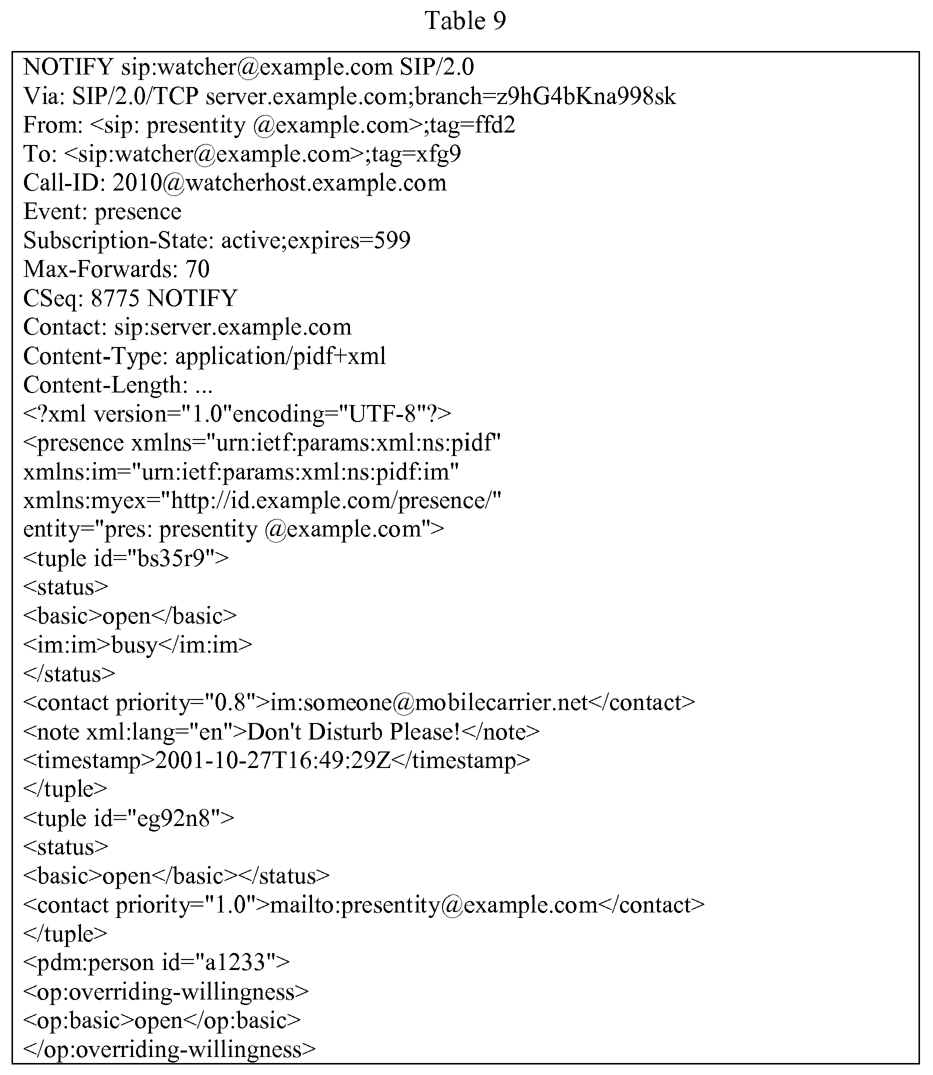

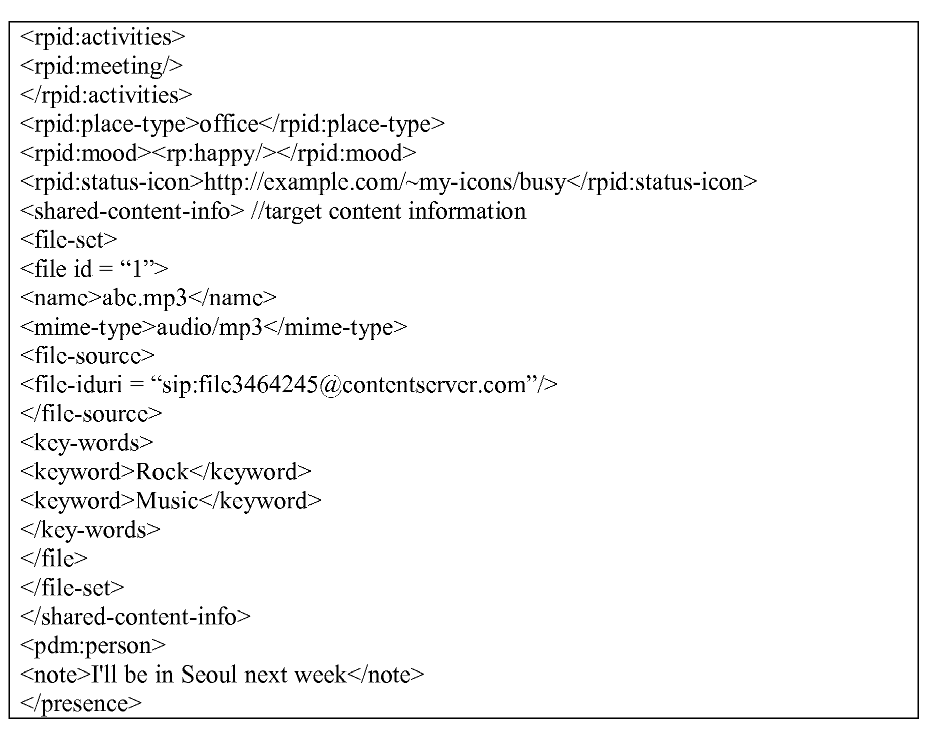

With the exemplary notification message (NOTIFY(Event:presence)) of table 9, the presence server 1301 notifies the second client server 102 (see 'To: <SIP:watcher@example.com>') of the presence status of registered users with the subscription result (see between <shared-content-info> and </shared-content-info>).

In more detail, the presence notification message (NOTIFY(Event:presence)) contains the presence information indicating the status (i.e., 'open' and 'busy') of the clients having IDs 'bs35r9' and 'eg92n8'. This format is substantially identical with that of the conventional presentation information specified in the OMA standard.

In an exemplary embodiment, the presence notification message (NOTIFY(Event:presence)) further contains the information on the content subscribed to by the second client 102 such as content name '<name> abc.mp3 </name>', content type '<mime-type>audio/mp3</mime-type>', content location '<file-iduri ="sip:file3464245@contentserver.com"/>', and content keyword '<keyword>Rock</keyword>' as well as the conventional presence information.

Next, the presence server 1301 sends the presence notification message to the second client 102 via a core server 701 in step S1640. The second client 102 sends an acknowledgement message to the presence server 1301 via the core server 701 in response to the presence notification message in step S1650.

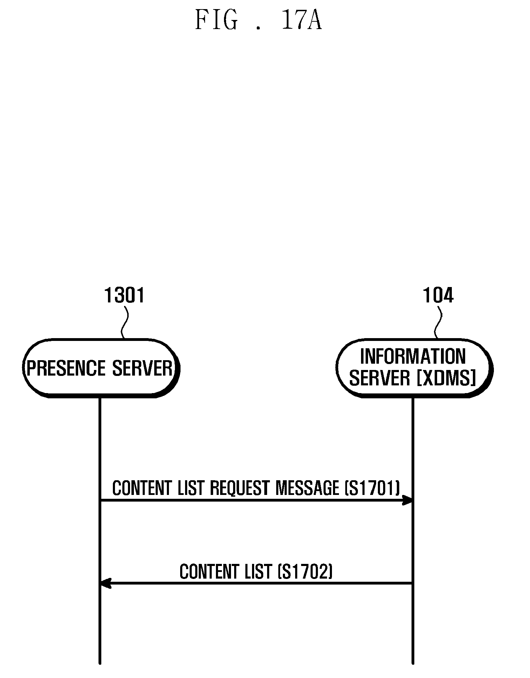

FIG. 17A is a signaling diagram illustrating a content list acquisition procedure in the content sharing system of FIG. 13 according to another exemplary embodiment of the present invention. In the content list requisition procedure, the presence server 1031 requests the information server 104 to send the content list.

Once the content list stored in the information server 104 is updated, the information server 104 con notify or publish the updated content list to the presence server 1301 such that the information server 104 and the presence server 1301 are synchronized with each other. FIG. 17A illustrates an exemplary embodiment in which the information server 104 publishes the updated content list to the presence server 1301.

If a presence list subscription request message (SUBSCRIBE(Event:presence)) is received from the second client 102, the presence server 1301 checks the access right of the second client 102 with reference to the presence rule. Next, the presence server 1301 sends a content list request message to the information server 104 in step S1701. Upon receipt of the content list request message, the information server 104 sends the requested content list to the presence server 1301 in step S 1702. The presence server 1301 generates a presence notification message with reference to the content list received from the information server 104 and sends the presence notification message to the second client 102 as described with reference to FIG. 15.

The content list acquisition procedures depicted in FIGs. 16A and 17A differ from each other. In FIG. 16A, the information server 104 receives the subscription request message (SUBSCRIBE(Event:xcap-diff)) from the presence server 1301 and, when the subscribed content list is updated, notifies the presence server 1301 of the update of the subscribed content list in response to the subscription request message.

Meanwhile, in FIG. 17A, the information server 104 does not receive the subscription request message (SUBSCRIBE(Event:xcap-diff)) but, when the content list is updated, publishes the updated content list to the presence server 1301.

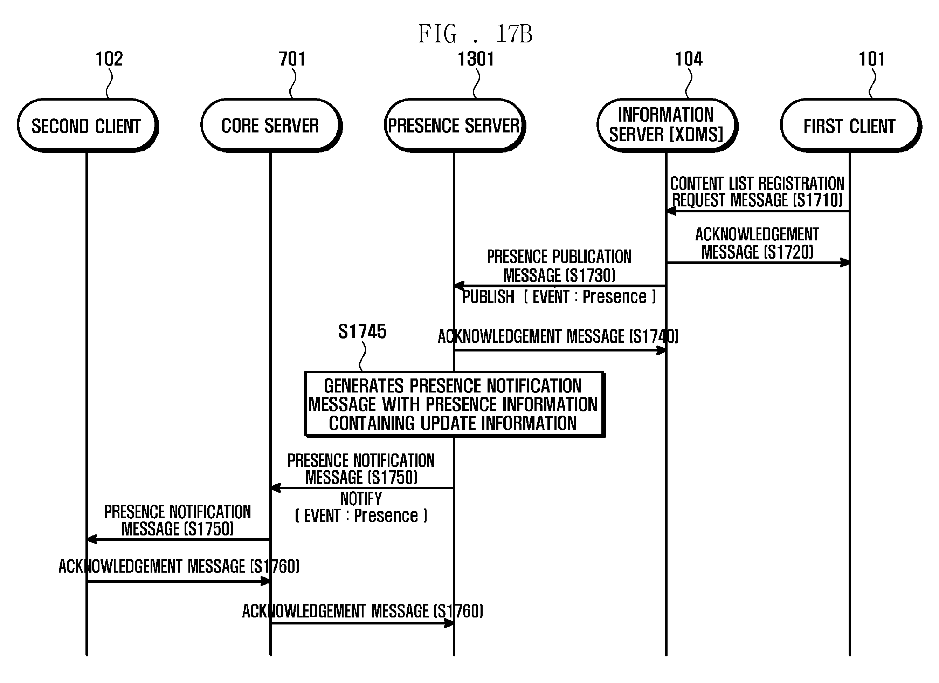

FIG. 17B is a signaling diagram illustrating a content list update notification procedure in the content sharing system of FIG. 13 according to another exemplary embodiment of the present invention. In this content list update notification procedure, when the first client's content list, which is subscribed to by the second client 102, is updated, the information server 104 publishes the updated content list to the presence server 1310. The procedure of FIG. 17B corresponds to steps S1320B, S1340B, and S 1350.

The first client 101 sends a content list registration request message (XCAP PUT(AUID=Shared-content-list)) to the information server 104 for storing the metadata of a shared content in step S1710. This process is substantially identical with that described with reference to FIG. 5A. Upon receipt of the content list registration request message (XCAP PUT(AUID=Shared-content-list)), the information server 104 sends an acknowledgment message to the first client 101 in step S1720.

Next, the information server 104 generates a presence publication message and sends the presence publication message to the presence server 1301 in step S1730. The presence publication message may be a PUBLISH message (PUBLISH(Event:presence)) as shown in table 10 as an example.

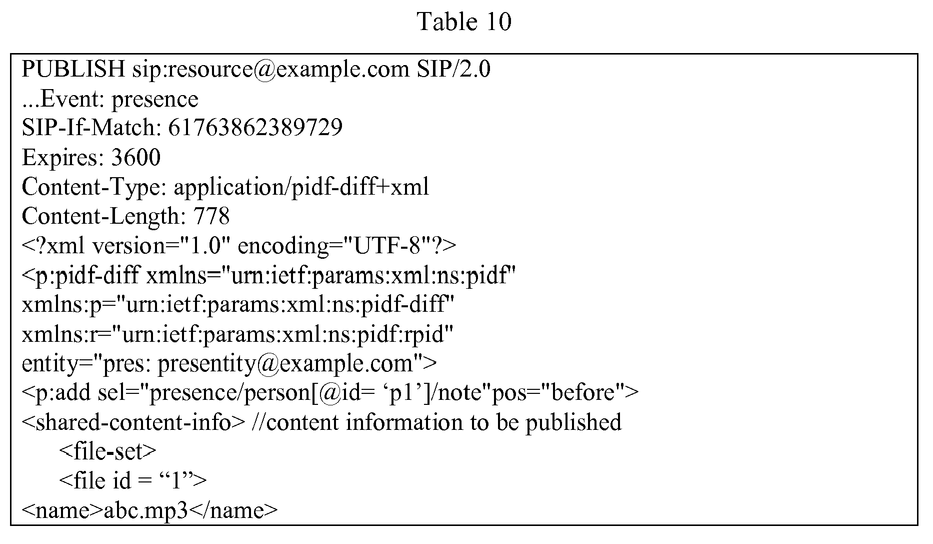

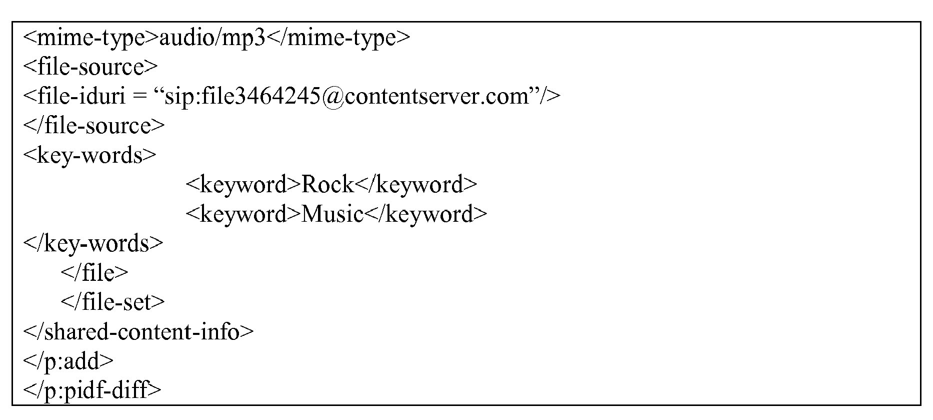

In the exemplary presence publication message (PUBLISH(Event:presence)) of table 10, the metadata of the contents to be published is specified with '<shared-content-info>' tag (see between <shared-content-info> and </shared-content-info>).

In table 10, the metadata of the content to be published includes content name, content type, content location, and content keyword.

Upon receipt of the presence publication message, the presence server 1310 sends an acknowledgement message to the information server in step S 1740 and generates a presence notification message (NOTIFY(Event:presence)) with the metadata of the updated content extracted from the presence publication message (PUBLISH(Event:presence)) in step S 1745. The presence notification message (NOTIFY(Event:presence)) may be formatted as shown in table 9. In an exemplary embodiment, the presence notification message can be formatted in the form of the presence information specified in the OMA standard.

Next, the presence server 1301 sends the presence notification message (NOTIFY(Event:presence)) to the second client 102 via the core server 701 in step S1750. The second client 102 sends an acknowledgement message to the presence server 1301 via the core server 701 in response to the presence notification message (NOTIFY(Event:presence)) in step S 1760.

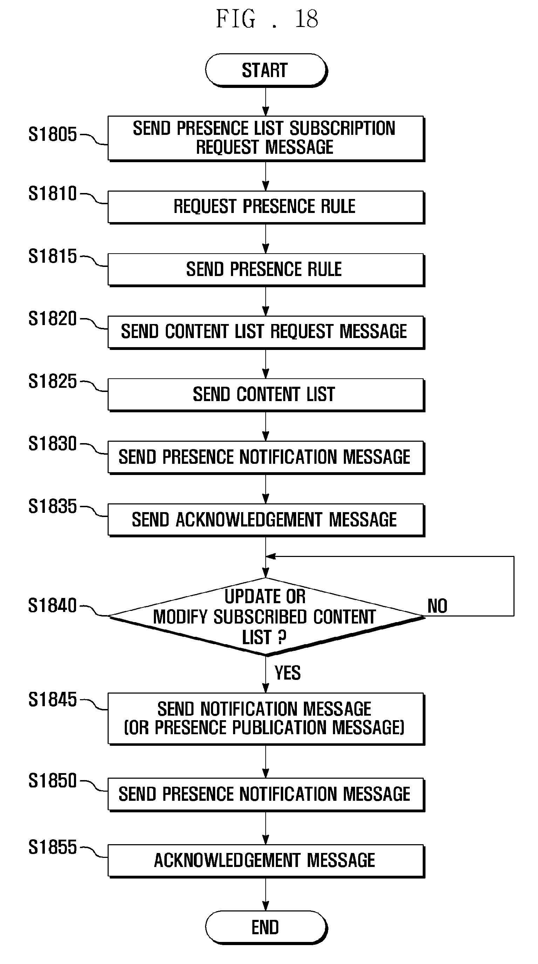

FIG. 18 is a flowchart illustrating the content sharing method generalized from the procedures of FIGs. 15, 16A, 16B, 17A, and 17B, according to an exemplary embodiment of the present invention. The details of message formats that are already described above are omitted.

Referring to FIG. 18, the second client 102 sends a presence list subscription request message to the presence server 1301 for receiving notification of the update of a specific content in step S1805. Upon receipt of the presence list subscription request message, the presence message manager 1430A of the presence server 1301 requests the presence rule manager 1430B for the presence rule in step S1810. The presence rule manager 1430B sends the presence message manager 1430A the requested presence rule in step S1815. Next, the presence server 1310 checks the presence rule and sends a content list request message to the information server 104 in step S 1820. Upon receipt of the content list request message, the information server 104 sends a content list indicated by the content list request message to the presence server in step S 1825.

The presence server 1310 checks the presence rule and the content list and, when the content subscribed to by the second client 102 exists, sends a presence notification message containing the information about the content to the second client 102 in step S 1830. The second client 102 sends an acknowledgement message to the presence server 1301 in response to the presence notification message in step S1835.

Afterward, the information server 104 monitors to detect an update or modification of the content subscribed to by the second client 102 in step S 1840. If there is an update or modification of the content subscribed to by the second client 102 at step S1840, the information server 104 sends an update notification message to the presence server 1301 in step S 1845. In another exemplary embodiment, the information server 104 sends the presence server 1301 a presence publication message rather than the update notification message at step S 1845.

Upon receipt of the update notification message or the presence publication message, the presence server 1301 sends the second client 102 a presence notification message containing the metadata of the updated content in step S 1850. The second client 102 sends an acknowledgement message to the presence server 1301 in response to the presence notification message.

### Third Exemplary Embodiment

A content sharing method according to a third exemplary embodiment of the present invention is described hereafter with reference to FIGs. 19 to 21.

FIG. 19 is a diagram illustrating a framework of a content sharing system according to a third exemplary embodiment of the present invention. As illustrated in FIG. 19, the content sharing system includes a first client 101, a second client 102, a content server 103, and a presence server 1301.

Since the first and second client 101 and 102 and the content and presence server 103 and 1301 are nearly identical with those described with reference to FIG. 1 or FIG. 13 in their operations, detailed descriptions thereof are omitted in the description of this exemplary embodiment.

In FIG. 19, the second client 102 requests a subscription to the presence server 1301 and the presence server 1201 notifies the second client 102 of the subscription result. Since steps S1910A and S1910B of FIG. 19 correspond to steps S110A and S110B of FIG. 1, and step S1930 of FIG. 19 is substantially identical with step S1330 of FIG. 13, detailed descriptions thereof are omitted in the description of this exemplary embodiment.

In addition, it is assumed that the first client 101 has already registered the content list and presence rules of the individual clients with the presence server 1301.

Unlike the first and second exemplary embodiments, the first client 101 or the content server 103 publishes the update information of the content list to the presence server directly in the third exemplary embodiment.

The second client 102 first requests the presence server 1310 for a subscription to the content list in step S 1930. After the subscription, if the first client 101 or the content server 103 publishes the content list updated at step S1920A or S1920B to the presence server 1301, the presence server 1301 notifies the second client 102 of the updated content list as the subscription result in step S 1940.

With the updated content list, the second client 102 can check the location of a target content and download the target from the first client's local storage in step S1950B or the content server 103 in step S1950A using a protocol such as MSRP or HTTP.

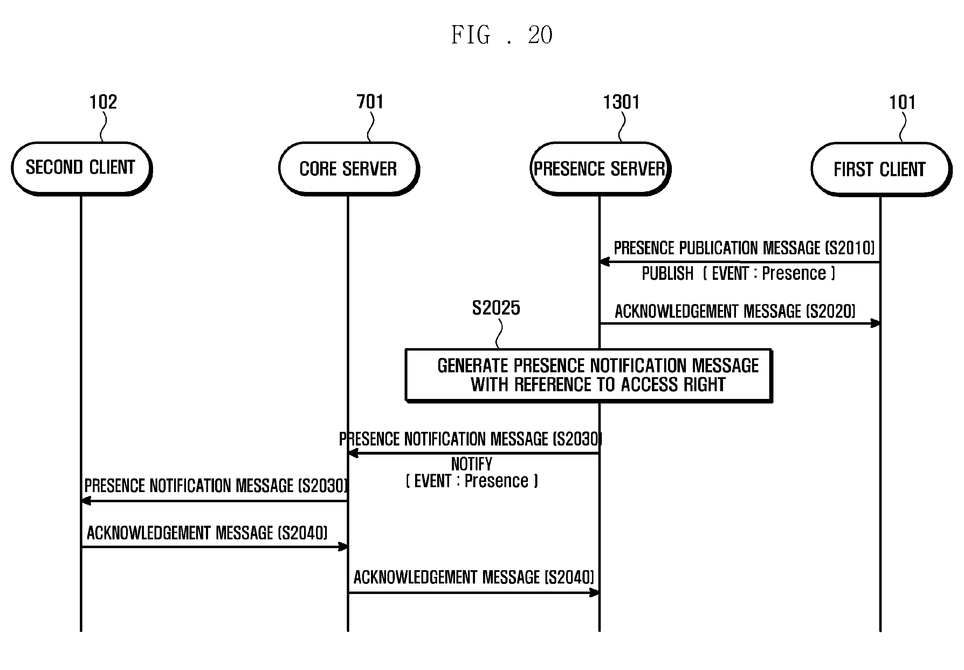

FIG. 20 is a signaling diagram illustrating a notification procedure in the content sharing system of FIG. 19 according to an exemplary embodiment of the present invention. When the first client 101 publishes an update of the content list after the subscription of the second client 102 to the content list, the presence server 1301 notifies the second client of the updated content list.

The first client 101 sends a presence publication message containing information on an updated content to the presence server 1301 in step S2010. The presence publication message can be the PUBLISH message (PUBLISH(Event:presence)) as shown in table 10 as an example. The presence server 1301 sends an acknowledgement message to the first client 101 in response to the presence publication message in step S2020.

Next, the presence server 1301 extracts the metadata of the updated content from the presence publication message (PUBLISH(Event:presence)) and generates a presence notification message (NOTIFY(Event:presence)) with the metadata in step S2025. Here, the presence notification message can be generated in the format of presence information, which is specified in the OMA standard, with the update information of the content.

Next, the presence server 1301 sends the presence notification message (NOTIFY(Event:presence)) to the second client 102 via a core server 710 in step S2030. In response to the presence notification message (NOTIFY(Event:presence)), the second client 102 sends an acknowledgement message to the presence server 1301 via the core server 701 in step S2040.

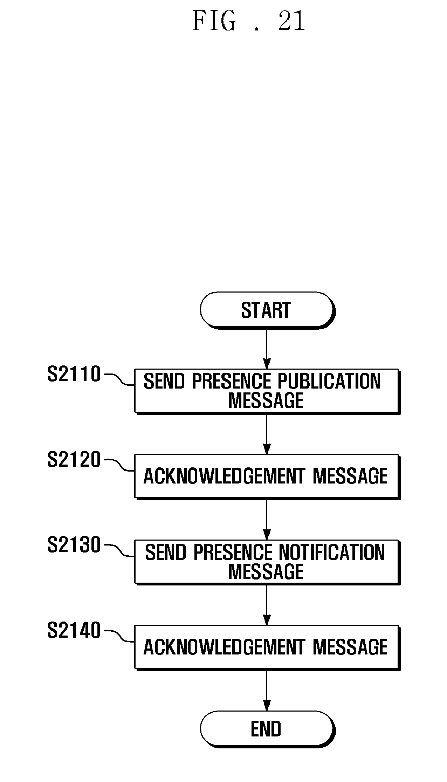

FIG. 21 is a diagram illustrating a content sharing method implemented with the notification procedure of FIG. 20, according to an exemplary embodiment of the present invention.

Referring to FIG. 21, the first client 101 sends the presence publication message (PUBLISH(Event:presence)) to the presence server 1301 for directly publishing the information about a stored content on the presence server 1301 in step S2110. Upon receipt of the presence publication message (PUBLISH(Event:presence)), the presence server 1301 sends an acknowledgement message to the first client 101 in step S2120. Next, the presence server 1301 generates a presence notification message (NOTIFY(Event:presence)) with the metadata of the updated content extracted from the presence publication message (PUBLISH(Event:presence)) and sends the presence notification message to the second client 102 in step S2130. In response to the presence notification message, the second client 102 sends an acknowledgement message to the presence server 1301 in step S2140.

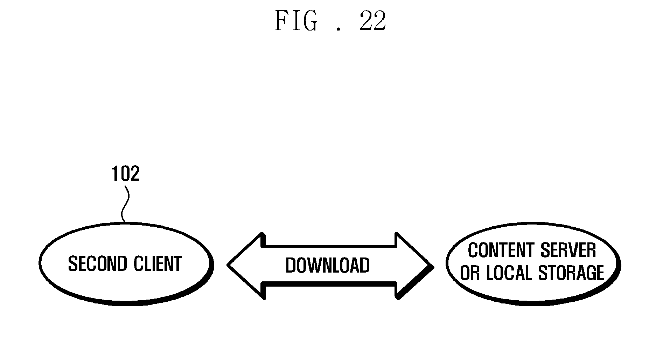

FIG. 22 is a diagram illustrating a content download procedure of the content sharing system of FIG. 19, according to an exemplary embodiment of the present invention. In the content download procedure, the second client 102 downloads the content stored within the local storage of the first client 101 or the content server 103.

The second client 102 acquires the URI indicating the storage location of a specific content from the query result message or the (presence) notification message received in response to a query request or subscription request message. Accordingly, the second client 102 can download the content stored in the storage location indicated by the URI using a protocol such as MSRP and HTTP.

As described above, the SIP network-based content sharing method and system of exemplary embodiments of the present invention enables the clients to search and download the contents shared in the IMS domain as well as listed in the Presence Contact List (PCL). In addition, the content sharing method and system allows a client to permanently store the content within a server and to share a content with a specific client.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1. A content sharing method, the method comprising:
storing, by a first client, a content in one of a content server and a local storage and assigning a content IDentifier (ID) to the content;
creating a content list having content items, each identified by a unique content ID;
registering the content list and an access rule with an information server; and
sending, when a second client requests one of a query and a subscription of the content, a respective one of a query result and a subscription result from the information server to the second client in consideration of a second client's access right specified in the access rule.

2. The method of claim 1, wherein the content ID comprises a Uniform Resource Identifier (URI).

3. The method of claim 1, wherein each content item comprises at least one of a content name, a content type, a content size, a content owner, and at least one content keyword.

4. The method of claim 3, wherein the access rule comprises at least one of an access right range, an access right type, and accessible information.

5. The method of claim 4, wherein the access right range specifies access levels including specific clients, a specific domain's client, an anonymous client, and an aggregation proxy server-authenticated client.

6. The method of claim 4, wherein the access right type specifies access schemes including a query and a subscription.

7. The method of claim 6, wherein the accessible information comprises at least one of a content name, a content type, a content size, a content location, a content keyword, and a content owner.

8. The method of claim 1, wherein the query result comprises at least a content name, a content type, a content size, a content location, and a content owner.

9. The method of claim 1, further comprising requesting a subscription of the content by sending a subscription request message from the second client to the information server.

10. The method of claim 9, wherein the query result is created with reference to the access right and sent when the content list registered with the information server is updated.

11. The method of claim 10, wherein the subscription result is sent when the content list registered with the information server is updated.

12. The method of claim 10, wherein the subscription result is sent when a specific content item of the content list is updated.

13. The method of claim 1, further comprising downloading, by the second client, a specific content listed in the query result from one of the content server and the first client.

14. A content sharing system, the system comprising:
a first client for storing a shared content, for assigning a content IDentifier (ID) to the content, and for registering a content list and an access rule;
a content server for storing the shared content received from the first client;
an information server for registering the content list and the access rule received from the first client and for sending a query result in response to a query request and a subscription result in response to a subscription request; and
a second client for sending one of a query request and a subscription request for a specific content to the information server and for receiving a respective one of the query result and the subscription result from the information server.

15. The system of claim 14, wherein the content list comprises content items, each including at least one of a content name, a content type, a content size, a content owner, a content location, and a content keyword.
